# EUROPÄISCHE PATENTSCHRIFT

(11) **EP 3 802 303 B1**
(45) Veröffentlichungstag und Bekanntmachung des Hinweises auf die Patenterteilung: **20.07.2022**
(21) Anmeldenummer: 19722816.6
(22) Anmeldetag: 29.04.2019
(51) Int. Cl.: B62M 11/18, B62M 11/14, B62M 6/55, F16H 3/66

(54) **MEHRSTUFENGETRIEBE IN PLANETENBAUWEISE FÜR EIN FAHRRAD ODER PEDELEC**
PLANET-TYPE MULTI-STAGE TRANSMISSION FOR A BICYCLE OR PEDELEC
TRANSMISSION À ÉTAGES MULTIPLES DE CONSTRUCTION PLANÉTAIRE POUR UNE BICYCLETTE OU UN VÉLO ÉLECTRIQUE

(30) Priorität: 28.05.2018 DE 102018208380
(43) Veröffentlichungstag der Anmeldung: 14.04.2021
(73) Patentinhaber: ZF Friedrichshafen AG, 88046 Friedrichshafen (DE)
(72) Erfinder: ZIEMER, Peter, 88069 Tettnang (DE); MARGRAF, Christoph, 88677 Markdorf (DE); RIEDISSER, Thomas, 88138 Sigmarszell (DE); DOERR, Ulrich, 78467 Konstanz (DE); FÜHRER, Kim, 88131 Lindau (DE); DOEPFERT, Hagen, 88131 Lindau (DE)
(74) Vertreter: ZF Friedrichshafen AG
(86) Internationale Anmeldenummer: PCT/EP2019/060852
(87) Internationale Veröffentlichungsnummer: WO 2019/228726

(56) Entgegenhaltungen:
- TW-A- 200 906 673
- TW-A- 201 542 418
- US-A1- 2011 177 911
- US-A1- 2014 361 511

## Beschreibung

Die Erfindung betrifft ein Mehrstufengetriebe in Planetenbauweise für ein Fahrrad oder Pedelec. Darüber hinaus betrifft die Erfindung ein Fahrrad oder ein Pedelec mit dem Mehrstufengetriebe.

Aus dem Stand der Technik sind eine Vielzahl von Fahrrädern und Pedelecs bekannt, die üblicherweise mit Ketten- oder Nabenschaltungen ausgestattet sind. Pedelecs unterscheiden sich von Fahrrädern dadurch, dass eine elektrische Maschine vorgesehen ist, die den Fahrer unterstützt. Bei Pedelecs ist in einigen Anwendungen ein Nabenmotor im Vorder- oder Hinterrad eingebaut. Nabenmotoren im Vorderrad wirken sich durch das hohe Gewicht ungünstig auf das Fahrverhalten aus. Dagegen sind im Hinterrad angeordnete Nabenmotoren bislang mit wartungsunfreundlichen Kettenschaltungen im Einsatz und wirken sich ebenso durch das hohe Gewicht ungünstig auf das Fahrverhalten aus. Aus diesem Grund sind bereits Pedelecs entwickelt worden, bei denen ein Getriebe in Vorgelegebauweise und ein Elektromotor in einem Tretlager angeordnet ist. Nachteilig an den bekannten Tretlagergetrieben in Vorgelegebauweise ist, dass diese über eine niedrige Leistungsdichte und darüber hinaus bedingt dadurch, dass nur Wälzleistung auftritt, einen schlechten Wirkungsgrad aufweisen.

Die Patentschrift TW 200 906 673 A offenbart ein Mehrstufengetriebe gemäß dem Oberbegriff des unabhängigen Anspruchs 1.

Der vorliegenden Erfindung liegt die Aufgabe zugrunde, ein Mehrstufengetriebe bzw. ein Fahrrad oder ein Pedelec mit dem Mehrstufengetriebe anzugeben, welche bei einer hohen Ganganzahl eine hohe Leistungsdichte und einen hohen Wirkungsgrad aufweisen.

Diese Aufgabe wird erfindungsgemäß durch die Merkmale des Patentanspruches 1 bzw. 25 gelöst, wobei sich vorteilhafte und beanspruchte Weiterbildungen aus den Unteransprüchen und der Beschreibung sowie den Zeichnungen ergeben.

Demzufolge wird ein Mehrstufengetriebe in Planetenbauweise z. B. als Tretlagergetriebe für ein Fahrrad oder ein Pedelec mit einer Getriebeeingangswelle als Antrieb, z. B. einer manuellen Antriebswelle bzw. Tretkurbelwelle oder dergleichen, und einer vorzugsweise koaxial zur Getriebeeingangswelle angeordneten Getriebeausgangswelle als Abtrieb vorgeschlagen. Das Mehrstufengetriebe oder Tretlagergetriebe umfasst zumindest drei vorzugsweise koaxial zur Getriebeeingangswelle angeordnete Planetenradsätze, wobei ein erster Planetenradsatz und ein zweiter Planetenradsatz als Hauptradsatz ausgeführt sind und zumindest ein weiterer Planetenradsatz als Vorschaltradsatz oder als Nachschaltradsatz ausgeführt sind.

Ferner sind zumindest drei Freilaufkupplungen und zumindest drei Bremsen, die z. B. auch als Freilaufbremsen oder dergleichen ausführbar sind, zum Realisieren von zumindest acht Gängen vorgesehen. Bei dem erfindungsgemäßen Mehrstufengetriebe ist ein Planetenradträger des ersten Planetenradsatzes mit einem Sonnenrad des zweiten Planetenradsatzes verbunden ist, wobei ein Hohlrad des ersten Planetenradsatzes über eine zweite Bremse festsetzbar ist und über eine zweite Freilaufkupplung mit einem Planetenradträger des zweiten Planetenradsatzes oder mit einem Hohlrad des zweiten Planetenradsatzes verbindbar ist. Ferner ist der Planetenradträger des zweiten Planetenradsatzes mit der Getriebeeingangswelle oder mit einem Radsatzelement als Ausgang eines Vorschaltradsatzes verbunden. Zudem ist das Hohlrad des zweiten Planetenradsatzes mit der Getriebeausgangswelle oder mit einem Radsatzelement als Eingang eines Nachschaltradsatzes verbunden. Entweder ist ein Sonnenrad des ersten Planetenradsatzes über eine erste Bremse festsetzbar und über eine erste Freilaufkupplung mit dem Planetenradträger des zweiten Planetenradsatzes oder mit dem Hohlrad des zweiten Planetenradsatzes verbindbar, oder das Sonnenrad des ersten Planetenradsatzes ist mit dem Planetenradträger des zweiten Planetenradsatzes oder mit dem Hohlrad des zweiten Planetenradsatzes verbunden.

Auf diese Weise wird eine Radsatzanordnung für das Mehrstufengetriebe realisiert, die aufgrund der Verschaltung der Radsätze eine besonders hohe Leistungsdichte bei möglichst hohem Wirkungsgrad realisiert, sodass damit eine hohe Systemintegration realisiert wird, unabhängig davon, in welcher axialen Reihenfolge die einzelnen Planetenradsätze als Hauptradsatz, Vorschaltradsatz oder Hauptschaltradsatz angeordnet sind.

Bei der vorliegenden Erfindung können die Planetenradsätze der Vorschaltradsätze oder der Nachschaltradsätze als Minus-Planetenradsatz oder als Plusplanetenradsatz ausgeführt sein. Ein Minus-Planetenradsatz kann bevorzugt in einen Plus-Planetenradsatz überführt werden, wenn die Planetenträger- und die Hohlradanbindung an diesem Radsatz miteinander vertauscht wird und der Betrag der Standübersetzung um 1 erhöht wird. Ein Minus-Planetenradsatz weist bekanntlich an seinem Planetenradträger verdrehbar gelagerte Planetenräder auf, die mit dem Sonnenrad und dem Hohlrad dieses Planetenradsatzes kämmen, so dass sich das Hohlrad bei festgehaltenem Planetenradträger und drehendem Sonnenrad in zur Sonnenraddrehrichtung entgegengesetzter Richtung dreht. Ein Plus-Planetenradsatz weist bekanntlich an seinem Planetenradträger verdrehbar gelagerte und miteinander in Zahneingriff stehende innere und äußere Planetenräder auf, wobei das Sonnenrad dieses Planetenradsatzes mit den inneren Planetenrädern und das Hohlrad dieses Planetenradsatzes mit den äußeren Planetenrädern kämmen, so dass sich das Hohlrad bei festgehaltenem Planetenradträger und drehendem Sonnenrad in zur Sonnenraddrehrichtung gleicher Richtung dreht.

Dies bedeutet für den Fachmann, dass bei den als Minus-Radsatz ausgeführten Vorschaltradsätzen und Nachschaltradsätzen ein erstes Radsatzelement als Eingang ein Planetenradträger ist, ein zweites Radsatzelement als Ausgang ein Sonnenrad oder ein Hohlrad ist und ein drittes, über eine dritte Bremse oder eine vierte Bremse festgesetztes Radsatzelement das verbleibende Hohlrad oder das verbleibende Sonnenrad ist. Ferner bedeutet dies, dass bei den als Plus-Radsatz ausgeführten Vorschaltradsätzen und den Nachschaltradsätzen ein erstes Radsatzelement als Eingang ein Hohlrad ist, ein zweites Radsatzelement als Ausgang ein Sonnenrad oder ein Planetenradträger ist und ein drittes, über eine dritte Bremse oder eine vierte Bremse festgesetztes Radsatzelement das verbleibende Sonnenrad oder der verbleibende Planetenradträger ist.

Ferner kann bei den Vorschaltradsätzen und bei den Nachschaltradsätzen zum Verblocken das erste Radsatzelement mit dem zweiten Radsatzelement oder das erste Radsatzelement mit dem dritten Radsatzelement oder das zweite Radsatzelement mit dem dritten Radsatzelement über die jeweils zugeordnete dritte oder vierte Freilaufkupplung realisiert werden.

Zur mechanischen Verbindung zwischen einem Vorschaltradsatz und dem Hauptschaltradsatz oder zur Verbindung zwischen zwei Vorschaltradsätzen werden sogenannte Zwischenwellen bei dem vorgeschlagenen Mehrstufengetriebe verwendet. Diese Zwischenwellen sind auch zur mechanischen Verbindung zwischen dem Hauptschaltradsatz und dem Nachschaltradsatz oder auch zwischen den Nachschaltradsätzen untereinander vorgesehen. Bei dem erfindungsgemäßen Mehrstufengetriebe wird bei einer Ausführung mit drei Radsätzen nur eine Zwischenwelle benötigt, während bei der Ausführung mit vier Radsätzen zwei Zwischenwellen vorgesehen sind.

Des Weiteren werden Wellen oder wellenartige Elemente zur Verbindung der verschiedenen Radsatzelemente der vorgesehenen Planetenradsätze eingesetzt. Unter dem Begriff Welle ist nicht ausschließlich ein zylindrisches drehbar gelagertes Maschinenelement zur Übertragung von Drehmomenten zu verstehen, sondern vielmehr sind hierunter auch allgemeine Verbindungselemente zu verstehen, die die einzelnen Radsatzelemente miteinander verbinden

Um neben dem manuellen Antrieb durch den Fahrer auch eine elektrische Unterstützungsleistung zu ermöglichen, kann bei dem erfindungsgemäßen Mehrstufengetriebe vorgesehen sein, dass zumindest eine elektrische Maschine oder dergleichen vorgesehen ist.

Die elektrische Maschine kann beispielsweise an der Getriebeeingangswelle, der Getriebeausgangswelle und/oder an den Zwischenwellen direkt oder auch über eine oder mehrere Getriebestufen, Ketten, Zahnriemen oder dergleichen angebunden werden. Hierfür kann auch gegebenenfalls ein Schaltelement, wie zum Beispiel eine Freilaufkupplung oder dergleichen eingesetzt werden. Dadurch ergibt sich der Vorteil, dass während des Pedalierens bei abgeschaltetem E-Maschinenantrieb keine Schleppmomente durch eine durch das Pedalierens angetriebene elektrische Maschine auftreten. Bei einer Anbindung zum Beispiel über eine Getriebestufe kann gegebenenfalls eine Übersetzung ins Langsame realisiert werden.

Bei der Anbindung der elektrischen Maschine an die Getriebeeingangswelle wird die elektrische Maschine jeweils mit der Gangübersetzungen betrieben. Bei der Anbindung der elektrischen Maschine an die Getriebeausgangswelle wird die elektrische Maschine EM jeweils mit der Kettenübersetzung betrieben, wobei hierdurch eine Lastschaltung realisiert werden könnte, wenn während einer Schaltung die Last ausschließlich von der elektrischen Maschine aufgebracht wird und das Getriebe sich in einem lastlosen Zustand befindet.

Bei der Ausführung des Mehrstufengetriebes als Tretlagerantrieb kann vorzugsweise ein Freilauf zwischen der Tretlagerkurbelwelle und dem Getriebeeingang realisiert werden. Hierdurch ergibt sich der Vorteil, dass eine angebundene elektrische Maschine weiter drehen kann, ohne dass sich die Pedale der Tretlagerkurbelwelle drehen.

Die vorgesehenen Bremsen können, wie bereits beschrieben, auch als schaltbare Freiläufe bzw. Freilaufbremsen ausgeführt werden, welches den Vorteil hat, dass ein schnelleres und einfacheres Überspringen von einzelnen Gängen beim Schalten ermöglicht wird.

Ein weiterer Aspekt der vorliegenden Erfindung liegt darin, auch ein Fahrrad oder ein Pedelec oder dergleichen mit dem vorgeschriebenen Mehrstufengetriebe bereitzustellen, wobei sich die bereits beschriebenen und weitere Vorteile ergeben.

Nachfolgend wird die vorliegende Erfindung anhand der Zeichnungen weiter erläutert. Es zeigen:
Figur 1 eine schematische Ansicht einer ersten Ausführungsvariante eines erfindungsgemäßen Mehrstufengetriebes mit einem Vorschaltsatz vor und einem Nachschaltradsatz nach dem Hauptschaltradsatz als 16 Gang-Variante;
Figur 2 eine schematische Ansicht einer zweiten Ausführungsvariante des Mehrstufengetriebes mit zwei Vorschaltradsätzen vor dem Hauptschaltradsatz als 16 Gang-Variante;
Figur 3 eine schematische Ansicht einer dritten Ausführungsvariante des Mehrstufengetriebes mit zwei Nachschaltradsätzen nach dem Hauptschaltradsatz als 16 Gang-Variante;
Figur 4 ein Schaltschema für die erste, zweite und dritte Ausführungsvariante des Mehrstufengetriebes;
Figur 5 eine schematische Ansicht einer vierten Ausführungsvariante des Mehrstufengetriebes gemäß Figur 2 mit Stufenplaneten bei einzelnen Radsätzen;
Figur 6 eine schematische Ansicht einer fünften Ausführungsvariante gemäß Figur 5 mit als Plus-Radsatz ausgebildeten Vorschaltradsätzen;
Figur 7 ein Schaltschema für die vierte und fünfte Ausführungsvariante des Mehrstufengetriebes;
Figur 8 eine sechste Ausführungsvariante des Mehrstufengetriebes mit einem Vorschaltradsatz vor dem Hauptschaltradsatz als 8 Gang-Variante;
Figur 9 ein Schaltschema für die sechste Ausführungsvariante des Mehrstufengetriebes;
Figur 10 eine siebente Ausführungsvariante des Mehrstufengetriebes mit zwei Vorschaltradsätzen vor dem Hauptschaltradsatz als 8 Gang-Variante; und
Figur 11 ein Schaltschema für die siebente Ausführungsvariante des Mehrstufengetriebes.

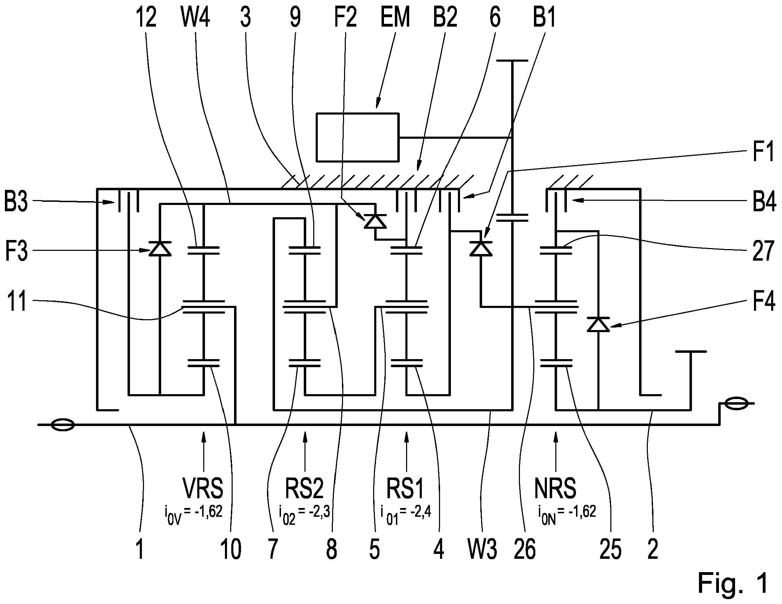

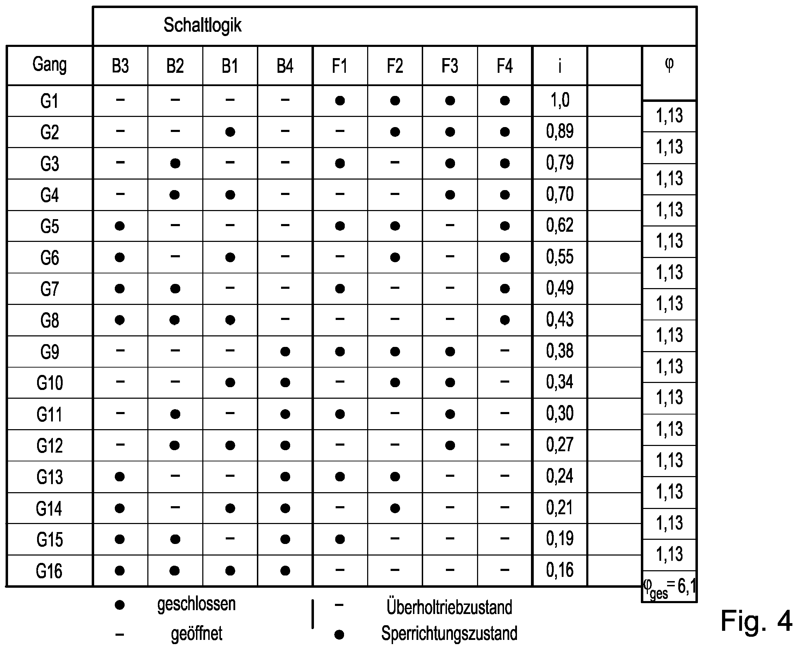

In den Figuren 1 bis 11 sind verschiedene Ausführungsvarianten eines erfindungsgemäßen Mehrstufengetriebes beispielhaft als Tretlagerantrieb in Koaxialbauweise mit den jeweiligen Standübersetzungen i0 der einzelnen Radsätze dargestellt, wobei die jeweiligen Schaltschemen die möglichen Gänge G1 bis G16 mit der dazugehörigen Übersetzung i und der Stufung bzw. Spreizung ϕ angeben. In den Schaltschemen gemäß Figuren 4, 7, 9 und 11 sind die einzelnen Zustände der Bremsen B1, B2, B3, B4 und der Freilaufkupplungen F1, F2, F3, F4 angedeutet, wobei bei den Bremsen B1, B2, B3, B4 ein Punkt den geschlossenen Zustand und ein Strich den geöffneten Zustand anzeigt, während bei den Freilaufkupplungen F1, F2, F3, F4 ein Punkt den Sperrrichtungszustand und ein Strich den Überholtriebzustand angibt. Der Überholbetrieb bzw. der Überholtriebzustand eines Freilaufes bedeutet, dass der Freilauf nicht sperrt. Der Freilauf kann sich in einem Überholtrieb befinden, wenn sich eines der mit dem Freilauf verbundenen Elemente so schnell dreht, dass der Freilauf nicht sperren kann. Der Sperrrichtungszustand bei einem Freilauf bedeutet, dass der Freilauf sperrt.

Unabhängig von der jeweiligen Ausführungsvariante des Mehrstufengetriebes ist vorgesehen, dass das Mehrstufengetriebe Planetenbauweise für ein Fahrrad, ein Pedelec oder dergleichen einsetzbar ist. Das Mehrstufengetriebe umfasst eine Getriebeeingangswelle 1 als Antrieb, welcher in den Figuren beispielsweise als Tretkurbelwelle ausgeführt ist, und eine Getriebeausgangswelle 2 als Abtrieb, welcher z. B. als Ketten- oder Zahnriemenrad ausgeführt sein kann. Das Mehrstufengetriebe umfasst je nach Ausführungsvariante zumindest drei Planetenradsätze VRS, VR1, VR2, RS1, RS2, NRS, NR1, NR2, wobei ein erster Planetenradsatz RS1 und ein zweiter Planetenradsatz RS2 als Hauptschaltradsatz ausgeführt sind, wobei zumindest ein weiterer Planetenradsatz VRS, VR1, VR2, NRS, NR1, NR2 als Vorschaltradsatz und/oder als Nachschaltradsatz ausgeführt ist. Darüber hinaus sind zumindest drei Freilaufkupplungen F1, F2, F3, F4 und zumindest drei Bremsen bzw. Freilaufbremsen B1, B2, B3, B4 als Schaltelemente zum Realisieren von zumindest 8 Gängen vorgesehen.

Bei sämtlichen Ausführungsvarianten des Mehrstufengetriebes ist bei dem Hauptschaltradsatz vorgesehen, dass ein Planetenradträger 5 des ersten Planetenradsatzes RS1 mit einem Sonnenrad 7 des zweiten Planetenradsatzes RS2 verbunden ist, wobei ein Hohlrad 6 des ersten Planetenradsatzes RS1 über eine zweite Bremse B2 gehäuseseitig festsetzbar ist und über eine zweite Freilaufkupplung F2 mit einem Planetenradträger 8 des zweiten Planetenradsatzes RS2 oder mit einem Hohlrad 9 des zweiten Planetenradsatzes RS2 verbindbar ist. Der Planetenradträger 8 des zweiten Planetenradsatzes RS2 ist mit der Getriebeeingangswelle 1 oder mit einem Radsatzelement als Ausgang eines Vorschaltradsatzes VR1, VRS über eine Zwischenwelle W3, W4 verbunden. Das Hohlrad 9 des zweiten Planetenradsatzes RS2 ist mit der Getriebeausgangswelle 2 oder mit einem Radsatzelement als Eingang eines Nachschaltradsatzes NRS, NR1 über eine Zwischenwelle W3, W4 verbunden. Ein Sonnenrad 4 des ersten Planetenradsatzes RS1 ist entweder über eine erste Bremse B1 festsetzbar und über eine erste Freilaufkupplung F1 mit dem Planetenradträger 8 des zweiten Planetenradsatzes RS2 oder mit dem Hohlrad 9 des zweiten Planetenradsatzes RS2 verbindbar, oder das Sonnenrad 4 des ersten Planetenradsatzes RS1 ist mit dem Planetenradträger 8 des zweiten Planetenradsatzes RS2 oder mit dem Hohlrad 9 des zweiten Planetenradsatzes RS2 verbunden.

Eine erste Ausführungsvariante des Mehrstufengetriebes als 16 Gang-Variante ist in Figur 1 dargestellt, bei der in axialer Reihenfolge ein Vorschaltradsatz VRS als Minus-Planetenradsatz, der zweite Planetenradsatz RS2 als Minus-Planetenradsatz, der erste Planetenradsatz RS1 als Minus-Planetenradsatz und ein Nachschaltradsatz NRS als Minus-Planetenradsatz vorgesehen sind. Ferner sind die Standübersetzung i_{0V} des Vorschaltradsatzes VRS, die Standübersetzung i₀₂ des zweiten Planetenradsatzes RS2, die Standübersetzung i₀₁ des ersten Planetenradsatzes RS1 und die Standübersetzung i_{0N} des Nachschaltradsatzes NRS in Figur 1 angegeben.

Im Detail ist bei der ersten Ausführungsvariante vorgesehen, dass die Getriebeeingangswelle 1 mit dem Planetenradträger 11 des Vorschaltradsatzes VRS verbunden ist. Das Sonnenrad 10 des Vorschaltradsatzes VRS ist über die dritte Bremse B3 festsetzbar bzw. mit dem Gehäuse 3 verbindbar und über eine dritte Freilaufkupplung F3 sowohl mit dem Hohlrad 12 des Vorschaltradsatzes VRS als auch mit dem Planetenradträger 8 des zweiten Planetenradsatzes RS2 sowie über die zweite Freilaufkupplung F2 des zweiten Planetenradsatzes RS2 mit dem Hohlrad 6 des ersten Planetenradsatzes RS1 verbindbar. Das Hohlrad 9 des zweiten Planetenradsatzes RS2 ist mit dem Planetenradträger 26 des Nachschaltradsatzes NRS und mit der elektrischen Maschine EM verbunden sowie über die erste Kupplung F1 mit dem Sonnenrad 4 des ersten Planetenradsatzes RS1 verbindbar. Das Sonnenrad 7 des zweiten Planetenradsatzes RS2 ist mit dem Planetenradträger 5 des ersten Planetenradsatzes RS1 verbunden, wobei das Hohlrad 27 des Nachschaltradsatzes NRS über die vierte Bremse B4 festsetzbar ist und über die vierte Freilaufkupplung F4 mit der Getriebeausgangswelle 2 verbindbar ist, und wobei das Sonnenrad 25 des Nachschaltradsatzes NRS mit der Getriebeausgangswelle 2 verbunden ist.

Die Radsatzanordnung des Mehrstufengetriebes gemäß der ersten Ausführungsvariante ermöglicht eine große Gesamtspreizung bei dem Mehrstufengetriebe, sodass der Einsatz vorzugsweise für Geländefahrräder, wie zum Beispiel MTB's besonders vorteilhaft ist. Ferner wird ermöglicht, dass die mit der Zwischenwelle W3 wirkverbundene elektrische Maschine EM in vorteilhafter Weise in den Gängen G1 bis G8 mit der Übersetzung i = 1 und in den Gängen G9 bis G16 mit der Übersetzung i = 0,38 betrieben wird, welches sich aus dem dazugehörigen Schaltschema gemäß Figur 4 ergibt. Wenn bei der ersten Ausführungsvariante gemäß Figur 1 auf den Nachschaltradsatz NRS und auf die dem Nachschaltradsatz NRS zugeordnete vierte Freilaufkupplung F4 verzichtet wird, ergibt sich eine 8 Gang-Variante des Mehrstufengetriebes.

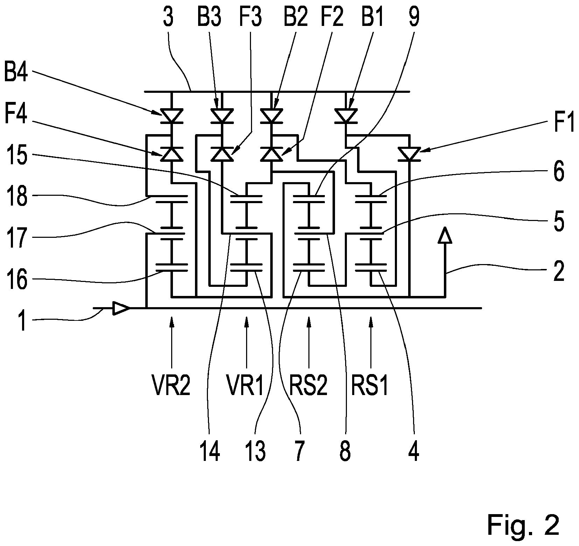

In Figur 2 ist eine zweite Ausführungsvariante des Mehrstufengetriebes als 16 Gang-Variante gezeigt, bei der in axialer Reihenfolge ein zweiter Vorschaltradsatz VR2 als Minus-Planetenradsatz, ein erster Vorschaltradsatz VR1 als Minus-Planetenradsatz, der zweite Planetenradsatz RS2 als Minus-Planetenradsatz und der erste Planetenradsatz RS1 als Minus-Planetenradsatz vorgesehen sind.

Bei dieser Radsatzanordnung ist vorgesehen, dass die Getriebeeingangswelle 1 mit dem Planetenradträger 17 des zweiten Vorschaltradsatzes VR2 verbunden ist. Das Hohlrad 18 des zweiten Vorschaltradsatzes VR2 ist über die vierte Bremse B4 festsetzbar, wobei das Sonnenrad 16 des zweiten Vorschaltradsatzes VR2 mit dem Planetenradträger 14 des ersten Vorschaltradsatzes VR1 verbunden ist und über eine vierte Freilaufkupplung F4 mit dem Hohlrad 18 des zweiten Vorschaltradsatzes VR2 verbindbar ist. Das Sonnenrad 13 des ersten Vorschaltradsatzes VR1 ist über die dritte Bremse B3 festsetzbar und über eine dritte Freilaufkupplung F3 mit dem Planetenradträger 14 des ersten Vorschaltradsatzes VR1 verbindbar, wobei das Hohlrad 15 des ersten Vorschaltradsatzes VR1 mit dem Planetenradträger 8 des zweiten Planetenradsatzes RS2 verbunden ist und über die zweite Freilaufkupplung F2 mit dem Hohlrad 6 des ersten Planetenradsatzes RS1 verbindbar ist. Das Sonnenrad 7 des zweiten Planetenradsatzes RS2 ist mit dem Planetenradträger 5 des ersten Planetenradsatzes RS1 verbunden, wobei das Hohlrad 9 des zweiten Planetenradsatzes RS2 mit der Getriebeausgangswelle 2 verbunden ist und über die erste Freilaufkupplung F1 mit dem Sonnenrad 4 des ersten Planetenradsatzes RS1 verbindbar ist, wobei das Sonnenrad 4 des ersten Planetenradsatzes RS1 über die erste Bremse B1 festsetzbar ist. Ferner ist das Hohlrad 6 des ersten Planetenradsatzes RS1 über die zweite Bremse B2 festsetzbar.

Die Radsatzanordnung gemäß Figur 2 entspricht der Anordnung gemäß Figur 1 jedoch mit anderer Radsatzreihenfolge und ohne elektrische Maschine EM.

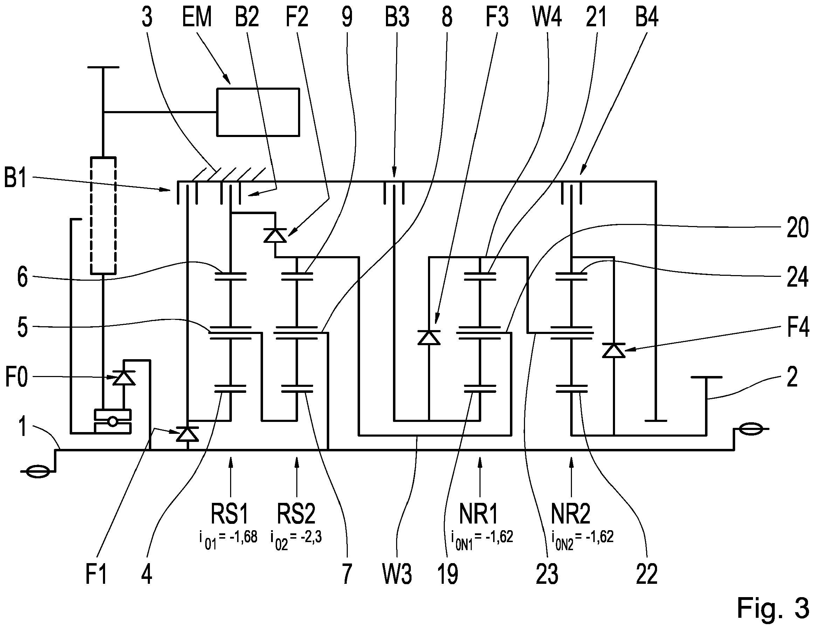

In Figur 3 wird eine dritte Ausführungsvariante des Mehrstufengetriebes als 16 Gang-Variante gezeigt, bei der in axialer Reihenfolge der erste Planetenradsatz RS1 als Minus-Planetenradsatz, der zweite Planetenradsatz RS2 als Minus-Planetenradsatz, ein erster Nachschaltradsatz NR1 als Minus-Planetenradsatz und ein zweiter Nachschaltradsatz NR2 als Minus-Planetenradsatz vorgesehen sind. Ferner sind die Standübersetzung i₀₁ des ersten Planetenradsatzes RS1, die Standübersetzung i₀₂ des zweiten Planetenradsatzes RS2, die Standübersetzung i_{0N1} des ersten Nachschaltradsatzes NR1 und die Standübersetzung i_{0N2} des zweiten Nachschaltradsatzes NR2 in Figur 3 angegeben.

Im Einzelnen ist bei der dritten Ausführungsvariante vorgesehen, dass die Getriebeeingangswelle 1 mit dem Planetenradträger 8 des zweiten Planetenradsatzes RS2 verbunden ist. Das Sonnenrad 7 des zweiten Planetenradsatzes RS2 ist mit dem Planetenradträger 5 des ersten Planetenradsatzes RS1 verbunden, wobei das Hohlrad 9 des zweiten Planetenradsatzes 2 mit dem Planetenradträger 20 des ersten Nachschaltradsatzes NR1 verbunden ist und über die zweite Freilaufkupplung F2 mit dem Hohlradrad 6 des ersten Planetenradsatzes RS1 verbindbar ist. Das Hohlrad 6 des ersten Planetenradsatzes RS1 ist über die zweite Bremse B2 festsetzbar, wobei das Sonnenrad 4 des ersten Planetenradsatzes RS1 über die erste Bremse B1 festsetzbar ist und über die erste Freilaufkupplung F1 mit der Getriebeeingangswelle 1 und dadurch mit dem Planetenradträger 8 des zweiten Planetenradsatzes RS2 verbindbar ist. Das Sonnenrad 19 des ersten Nachschaltradsatzes NR1 ist über die dritte Bremse B3 festsetzbar und über eine dritte Freilaufkupplung F3 mit dem Hohlrad 21 des ersten Nachschaltradsatzes NR1 verbindbar, wobei das Hohlrad 21 des ersten Nachschaltradsatzes NR1 mit dem Planetenradträger 23 des zweiten Nachschaltradsatzes NR2 verbunden ist. Das Sonnenrad 22 des zweiten Nachschaltradsatzes NR2 ist mit der Getriebeausgangswelle 2 verbunden und über eine vierte Freilaufkupplung F4 mit dem Hohlrad 24 des zweiten Nachschaltradsatzes NR2 verbindbar. Das Hohlrad 24 des zweiten Nachschaltradsatzes NR2 ist über die vierte Bremse B4 festsetzbar, wobei die Getriebeeingangswelle 1 über eine nullte Freilaufkupplung F0 mit der elektrischen Maschinen EM verbindbar ist.

Das Getriebeschema der dritten Ausführungsvariante gemäß Figur 3 bietet aufgrund seiner Einzelradsatzreihenfolge eine verbessere Raumökonomie. Zudem ist die elektrische Maschine EM über eine Freilaufkupplung F0 an die Getriebeeingangswelle 1 ankoppelbar. Hierdurch ergibt sich der Vorteil, dass während des Pedalierens bei abgeschaltetem E-Maschinenantrieb keine Schleppmomente durch eine durch das Pedalieren angetriebene elektrische Maschine EM erzeugt werden.

In Figur 4 ist ein Schaltschema für die erste, zweite und dritte Ausführungsvariante gemäß Figuren 1 bis 3 dargestellt.

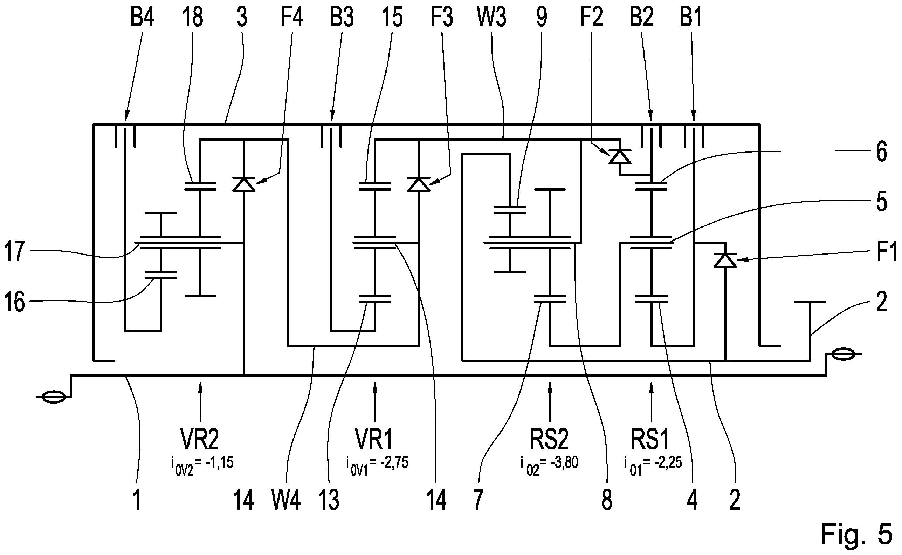

In Figur 5 wird eine vierte Ausführungsvariante des Mehrstufengetriebes als 16 Gang-Variante gezeigt, bei der in axialer Reihenfolge ein zweiter Vorschaltradsatz VR2 mit einem Stufenplaneten als Minus-Planetenradsatz, ein erster Vorschaltradsatz VR1 als Minus-Planetenradsatz, der zweite Planetenradsatz RS2 mit einem Stufenplaneten als Minus-Planetenradsatz und der erste Planetenradsatz RS1 als Minus-Planetenradsatz vorgesehen sind. Ferner sind die Standübersetzung i_{0V2} des zweiten Vorschaltradsatzes VR2, die Standübersetzung i_{0V1} des ersten Vorschaltradsatzes VR1, die Standübersetzung i₀₂ des zweiten Planetenradsatzes RS2 und die Standübersetzung i₀₁ des ersten Planetenradsatzes RS1 in Figur 5 angegeben.

Im Einzelnen ist bei der vierten Ausführungsvariante vorgesehen, dass die Getriebeeingangswelle 1 mit dem Planetenradträger 17 des zweiten Vorschaltradsatzes VR2 verbunden ist und über eine vierte Freilaufkupplung F4 mit dem Hohlrad 18 des zweiten Vorschaltradsatzes VR2 verbindbar ist. Das Sonnenrad 16 des zweiten Vorschaltradsatzes VR2 ist über die vierte Bremse B4 festsetzbar, wobei das Hohlrad 18 des zweiten Vorschaltradsatzes VR2 mit dem Planetenradträger 14 des ersten Vorschaltradsatzes VR1 verbunden ist und über eine dritte Freilaufkupplung F3 mit dem Hohlrad 15 des ersten Vorschaltradsatzes VR1 verbindbar ist. Das Sonnenrad 13 des ersten Vorschaltradsatzes VR1 ist über die dritte Bremse B3 festsetzbar, wobei das Hohlrad 15 des ersten Vorschaltradsatzes VR1 mit dem Planetenradträger 8 des zweiten Planetenradsatzes RS2 verbunden ist und über die zweite Freilaufkupplung F2 mit dem Hohlrad 6 des ersten Planetenradsatzes RS1 verbindbar ist. Das Hohlrad 9 des zweiten Planetenradsatzes 2 ist mit der Getriebeausgangswelle 2 verbunden und über die erste Freilaufkupplung F1 mit dem Sonnenrad 4 des ersten Planetenradsatzes RS1 verbindbar, wobei das Sonnenrad 7 des zweiten Planetenradsatzes RS2 mit dem Planetenradträger 5 des ersten Planetenradsatzes RS1 verbunden ist. Das Hohlrad 6 des ersten Planetenradsatzes RS1 ist über die zweite Bremse B2 festsetzbar, wobei das Sonnenrad 4 des ersten Planetenradsatzes RS1 über die erste Bremse B1 festsetzbar ist.

Das Getriebeschema der vierten Ausführungsvariante ermöglicht mit seiner Einzelradsatzreihenfolge eine kleinere Gesamtspreizung, vorzugsweise für Sporträder. Zur besseren Raumökonomie und für eine noch niedrigere oder höhere betragsmäßige Standgetriebeübersetzung sind bei der vierten Ausführungsvariante der zweite Vorschaltradsatz VR2 und der zweite Planetenradsatz RS2 mit einem Stufenplaneten ausgestattet.

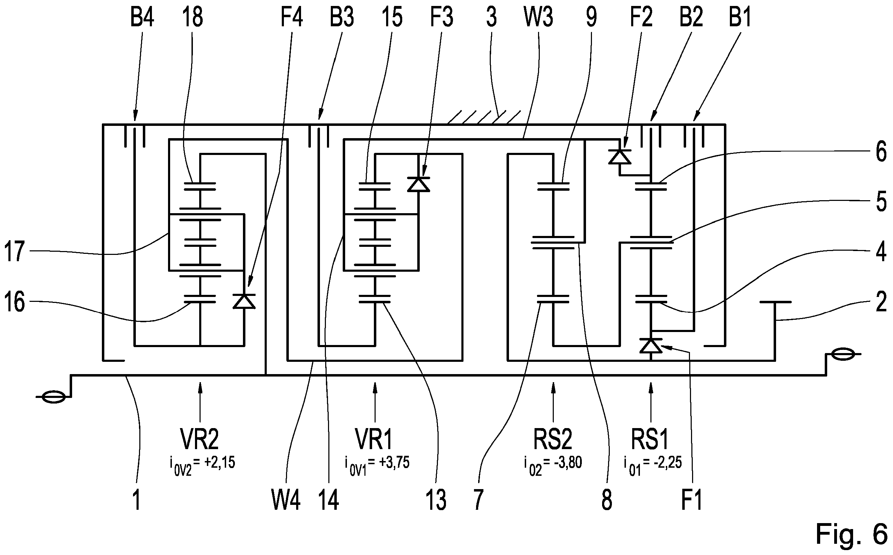

In Figur 6 wird eine fünfte Ausführungsvariante des Mehrstufengetriebes als 16 Gang-Variante gezeigt, bei der in axialer Reihenfolge ein zweiter Vorschaltradsatz VR2 als Plus-Planetenradsatz, ein erster Vorschaltradsatz VR1 als Plus-Planetenradsatz, der zweite Planetenradsatz RS2 als Minus-Planetenradsatz und der erste Planetenradsatz RS1 als Minus-Planetenradsatz vorgesehen sind. Ferner sind die Standübersetzung i_{0V2} des zweiten Vorschaltradsatzes VR2, die Standübersetzung i_{0V1} des ersten Vorschaltradsatzes VR1, die Standübersetzung i₀₂ des zweiten Planetenradsatzes RS2 und die Standübersetzung i₀₁ des ersten Planetenradsatzes RS1 in Figur 6 angegeben.

Im Einzelnen ergibt sich bei der fünften Ausführungsvariante, dass die Getriebeeingangswelle 1 mit dem Hohlrad 18 des zweiten Vorschaltradsatzes VR2 verbunden ist. Das Sonnenrad 16 des zweiten Vorschaltradsatzes VR2 ist über die vierte Bremse B4 festsetzbar und über eine vierte Freilaufkupplung F4 mit dem Planetenradträger 17 des zweiten Vorschaltradsatzes VR2 verbindbar, wobei der Planetenradträger 17 des zweiten Vorschaltradsatzes VR2 mit dem Hohlrad 15 des ersten Vorschaltradsatzes VR1 verbunden ist. Das Hohlrad 15 des ersten Vorschaltradsatzes VR1 ist über eine dritte Freilaufkupplung F3 mit dem Planetenradträger 14 des ersten Vorschaltradsatzes VR1 verbindbar, wobei das Sonnenrad 13 des ersten Vorschaltradsatzes VR1 über die dritte Bremse B3 festsetzbar ist. Der Planetenradträger 14 des ersten Vorschaltradsatzes VR1 ist mit dem Planetenradträger 8 des zweiten Planetenradsatzes RS2 verbunden und über die zweite Freilaufkupplung F2 des zweiten Planetenradsatzes RS2 mit dem Hohlrad 6 des ersten Planetenradsatzes RS1 verbindbar, wobei das Hohlrad 9 des zweiten Planetenradsatzes RS2 mit der Getriebeausgangswelle 2 verbunden ist und über die erste Freilaufkupplung F1 mit dem Sonnenrad 4 des ersten Planetenradsatzes RS1 verbindbar ist. Das Hohlrad 6 des ersten Planetenradsatzes RS1 ist über die zweite Bremse B2 festsetzbar, wobei das Sonnenrad 4 des ersten Planetenradsatzes RS1 ist über die erste Bremse B1 festsetzbar, wobei das Sonnenrad 7 des zweiten Planetenradsatzes RS2 mit dem Planetenradträger 5 des ersten Planetenradsatzes RS1 verbunden ist.

Das Getriebeschema der fünften Ausführungsvariante ermöglicht mit den als Plus-Radsätze ausgebildeten Vorschaltradsätzen VR1 und VR2 eine ungestufte Ausführung sowie eine betragsmäßig angeglichene Standgetriebeübersetzung zwischen dem zweiten Vorschaltradsatz VR2 und dem zweiten Planetenradsatz RS2 sowie zwischen dem ersten Vorschaltradsatz VR1 und dem ersten Planetenradsatz RS1. Infolgedessen können jeweils gleiche Sonnen- und Hohlräder eingesetzt werden.

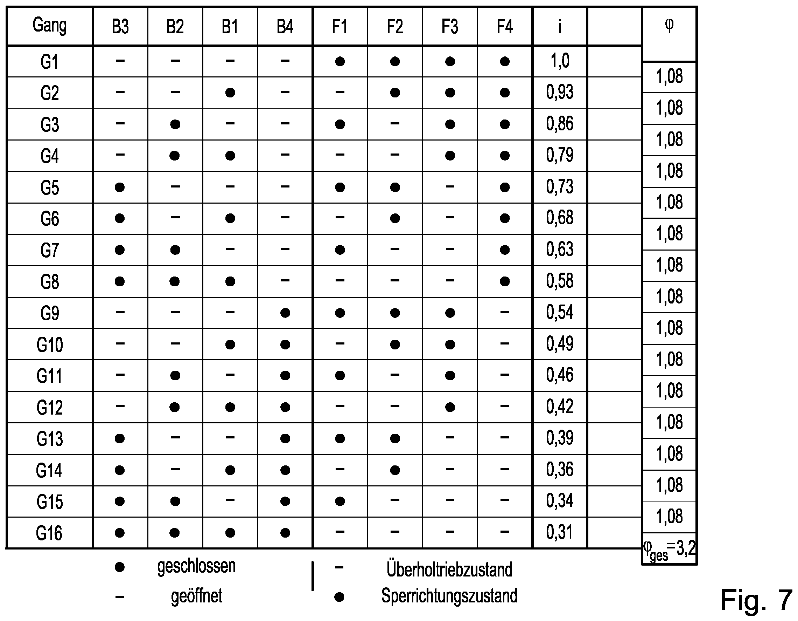

In Figur 7 ist ein Schaltschema für die vierte und fünfte Ausführungsvariante gemäß Figuren 5 und 6 dargestellt.

Aus den Schaltschemen gemäß Figuren 4 und 7 ergibt sich für die vorbeschriebenen Ausführungsvarianten, dass zum Schalten eines ersten Ganges G1 die erste, zweite, dritte und vierte Bremse B1, B2, B3, B4 geöffnet sind, wobei die erste, zweite, dritte und vierte Freilaufkupplung F1, F2, F3, F4 im Sperrrichtungszustand sind. Zum Schalten eines zweiten Ganges G2 ist die erste Bremse B1 geschlossen und die zweite, dritte und vierte Bremse B2, B3, B4 sind geöffnet, wobei die erste Freilaufkupplung F1 im Überholtriebzustand ist und die zweite, dritte und vierte Freilaufkupplung F2, F3, F4 im Sperrrichtungszustand sind. Zum Schalten eines dritten Ganges G3 ist die zweite Bremse B2 geschlossen und die erste, dritte und vierte Bremse B1, B3, B4 sind geöffnet, wobei die zweite Freilaufkupplung F2 im Überholtriebzustand ist und die erste, dritte und vierte Freilaufkupplung F1, F3, F4 im Sperrrichtungszustand sind. Zum Schalten eines vierten Ganges G4 sind die erste und die zweite Bremse B1, B2 geschlossen und die dritte und vierte Bremse B3, B4 sind geöffnet, wobei die erste und zweite Freilaufkupplung F1, F2 im Überholtriebzustand sind und die dritte und vierte Freilaufkupplung F3, F4 im Sperrrichtungszustand sind. Zum Schalten eines fünften Ganges G5 ist die dritte Bremse B3 geschlossen und die erste, zweite und vierte Bremse B1, B2, B4 sind geöffnet, wobei die erste, zweite und vierte Freilaufkupplung F1, F2, F4 im Sperrrichtungszustand sind und die dritte Freilaufkupplung F3 im Überholtriebzustand ist. Zum Schalten eines sechsten Ganges G6 sind die erste und dritte Bremse B1, B3 geschlossen und die zweite und vierte Bremse B2, B4 sind geöffnet, wobei die erste und dritte Freilaufkupplung F1, F3 im Überholtriebzustand sind und die zweite und vierte Freilaufkupplung F2, F4 im Sperrrichtungszustand sind. Zum Schalten eines siebenten Ganges G7 sind die erste und vierte Bremse B1, B4 geöffnet und die zweite und dritte Bremse B2, B3 sind geschlossen, wobei die erste und vierte Freilaufkupplung F1, F4 im Sperrrichtungszustand sind und die zweite und dritte Freilaufkupplung F2, F3 im Überholtriebzustand sind. Zum Schalten eines achten Ganges G8 sind die erste, zweite und dritte Bremse B1, B2, B3 geschlossen und die vierte Bremse B4 ist geöffnet, wobei die erste, zweite und dritte Freilaufkupplung F1, F2, F3 im Überholtriebzustand sind und die vierte Freilaufkupplung F4 im Sperrrichtungszustand ist. Zum Schalten eines neunten Ganges G9 sind die erste, zweite und dritte Bremse B1, B2, B3 geöffnet und die vierte Bremse B4 ist geschlossen, wobei die erste, zweite und dritte Freilaufkupplung F1, F2, F3 im Sperrrichtungszustand sind und die vierte Freilaufkupplung F4 im Überholtriebzustand ist. Zum Schalten eines zehnten Ganges G10 sind die erste und vierte Bremse B1, B4 geschlossen und die zweite und dritte Bremse B2, B3 sind geöffnet, wobei die erste und vierte Freilaufkupplung F1, F4 im Überholtriebzustand sind und die zweite und dritte Freilaufkupplung F2, F3 im Sperrrichtungszustand sind. Zum Schalten eines elften Ganges G11 sind die erste und dritte Bremse B1, B3 geöffnet und die zweite und vierte Bremse B2, B4 sind geschlossen, wobei die erste und dritte Freilaufkupplung F1, F3 im Sperrrichtungszustand sind und die zweite und vierte Freilaufkupplung F2, F4 im Überholtriebzustand sind. Zum Schalten eines zwölften Ganges G12 sind die erste, zweite und vierte Bremse B1, B2, B4 geschlossen und die dritte Bremse B3 ist geöffnet, wobei die erste, zweite und vierte Freilaufkupplung F1, F2, F4 im Überholtriebzustand sind und die dritte Freilaufkupplung F3 im Sperrrichtungszustand sind. Zum Schalten eines dreizehnten Ganges G13 sind die erste und zweite Bremse B1, B2 geöffnet und die dritte und vierte Bremse B3, B4 sind geschlossen, wobei die erste und zweite Freilaufkupplung F1, F2 im Sperrrichtungszustand sind und die dritte und vierte Freilaufkupplung F3, F4 im Überholtriebzustand sind. Zum Schalten eines vierzehnten Ganges G14 sind die erste, dritte und vierte Bremse B1, B3, B4 geschlossen und die zweite Bremse B2 ist geöffnet, wobei die erste, dritte und vierte Freilaufkupplung F1, F3, F4 im Überholtriebzustand sind und die zweite Freilaufkupplung F2 im Sperrrichtungszustand ist. Zum Schalten eines fünfzehnten Ganges G15 ist die erste Bremse B1 geöffnet und die zweite, dritte und vierte Bremse B2, B3, B4 sind geschlossen, wobei die erste Freilaufkupplung F1 im Sperrrichtungszustand ist und die zweite, dritte und vierte Freilaufkupplung F2, F3, F4 im Überholtriebzustand sind. Zum Schalten eines sechzehnten Ganges G16 sind die erste, zweite, dritte und vierte Bremse B1, B2, B3, B4 geschlossen, wobei die erste, zweite, dritte und vierte Freilaufkupplung F1, F2, F3, F4 im Überholtriebzustand sind.

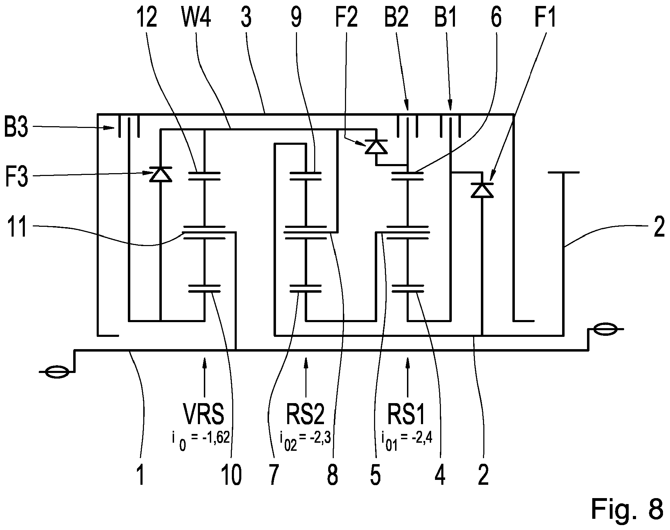

In Figur 8 wird eine sechste Ausführungsvariante des Mehrstufengetriebes als 8 Gang-Variante gezeigt, bei der in axialer Reihenfolge der Vorschaltradsatz VRS als Minus-Planetenradsatz, der zweite Planetenradsatz RS2 als Minus-Planetenradsatz und der erste Planetenradsatz RS1 als Minus-Planetenradsatz vorgesehen sind. Ferner sind die Standübersetzung i_{0V} des Vorschaltradsatzes VRS, die Standübersetzung i₀₂ des zweiten Planetenradsatzes RS2 und die Standübersetzung i₀₁ des ersten Planetenradsatzes RS1 in Figur 8 angegeben.

Im Detail ist bei der sechsten Ausführungsvariante vorgesehen, dass die Getriebeeingangswelle 1 mit dem Planetenradträger 11 des Vorschaltradsatzes VRS verbunden ist, wobei das Sonnenrad 10 des Vorschaltradsatzes VRS über die dritte Bremse B3 festsetzbar ist und über eine dritte Freilaufkupplung F3 mit dem Hohlrad 12 des Vorschaltradsatzes VRS verbindbar ist. Das Hohlrad 12 des Vorschaltradsatzes VRS ist mit dem Planetenradträger 8 des zweiten Planetenradsatzes RS2 verbunden und über die zweite Freilaufkupplung F2 mit dem Hohlrad 6 des ersten Planetenradsatzes RS1 verbindbar, wobei das Hohlrad 9 des zweiten Planetenradsatzes RS2 mit der Getriebeausgangswelle 2 verbunden ist und über die erste Freilaufkupplung F1 des ersten Planetenradsatzes RS1 mit dem Sonnenrad 4 des ersten Planetenradsatzes RS1 verbindbar ist. Das Sonnenrad 7 des zweiten Planetenradsatzes RS2 ist mit dem Planetenradträger 5 des ersten Planetenradsatzes RS1 verbunden, wobei das Hohlrad 6 des ersten Planetenradsatzes RS1 über die zweite Bremse B2 festsetzbar ist, und wobei das Sonnenrad 4 des ersten Planetenradsatzes RS1 über die erste Bremse B1 festsetzbar ist.

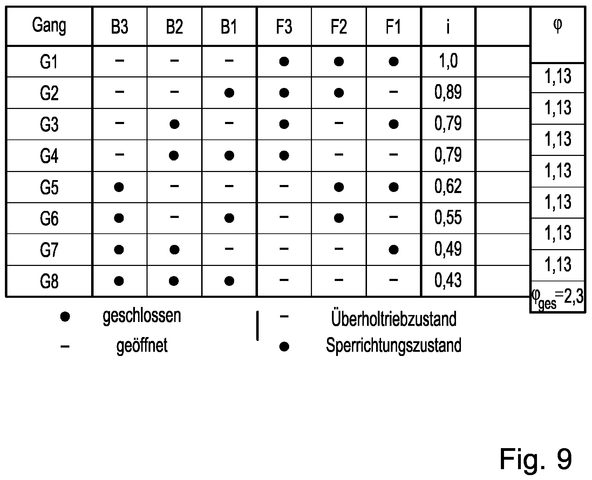

In Figur 9 ist ein Schaltschema für die sechste Ausführungsvariante gemäß Figur 8 dargestellt. Aus dem Schaltschema ergibt sich, dass zum Schalten eines ersten Ganges G1 die erste, zweite und dritte Bremse B1, B2, B3 geöffnet sind, wobei die erste, zweite und dritte Freilaufkupplung F1, F2, F3 im Sperrrichtungszustand sind. Zum Schalten eines zweiten Ganges G2 ist die erste Bremse B1 geschlossen und die zweite und dritte Bremse B2, B3 sind geöffnet, wobei die erste Freilaufkupplung F1 im Überholtriebzustand ist und die zweite und dritte Freilaufkupplung F2, F3 im Sperrrichtungszustand sind. Zum Schalten eines dritten Ganges G3 ist die zweite Bremse B2 geschlossen und die erste und dritte Bremse B1, B3 sind geöffnet, wobei die zweite Freilaufkupplung F2 im Überholtriebzustand ist und die erste und dritte Freilaufkupplung F1, F3 im Sperrrichtungszustand sind. Zum Schalten eines vierten Ganges G4 sind die erste und zweite Bremse B1, B2 geschlossen und die dritte Bremse B3 ist geöffnet, wobei die erste und zweite Freilaufkupplung F1, F2 im Überholtriebzustand sind und die dritte Freilaufkupplung F3 im Sperrrichtungszustand ist. Zum Schalten eines fünften Ganges G5 ist die dritte Bremse B3 geschlossen und die erste und zweite Bremse B1, B2 sind geöffnet, wobei die erste und zweite Freilaufkupplung F1, F2 im Sperrrichtungszustand sind und die dritte Freilaufkupplung F3 im Überholtriebzustand ist. Zum Schalten eines sechsten Ganges G6 sind die erste und dritte Bremse B1, B3 geschlossen und die zweite Bremse B2 ist geöffnet, wobei die erste und dritte Freilaufkupplung F1, F3 im Überholtriebzustand sind und die zweite Freilaufkupplung F2 im Sperrrichtungszustand sind. Zum Schalten eines siebenten Ganges G7 ist die erste Bremse B1 geöffnet und die zweite und dritte Bremse B2, B3 sind geschlossen, wobei die erste Freilaufkupplung F1 im Sperrrichtungszustand ist und die zweite und dritte Freilaufkupplung F2, F3 im Überholtriebzustand sind. Zum Schalten eines achten Ganges G8 sind die erste, zweite und dritte Bremse B1, B2, B3 geschlossen, wobei die erste, zweite und dritte Freilaufkupplung F1, F2, F3 im Überholtriebzustand sind.

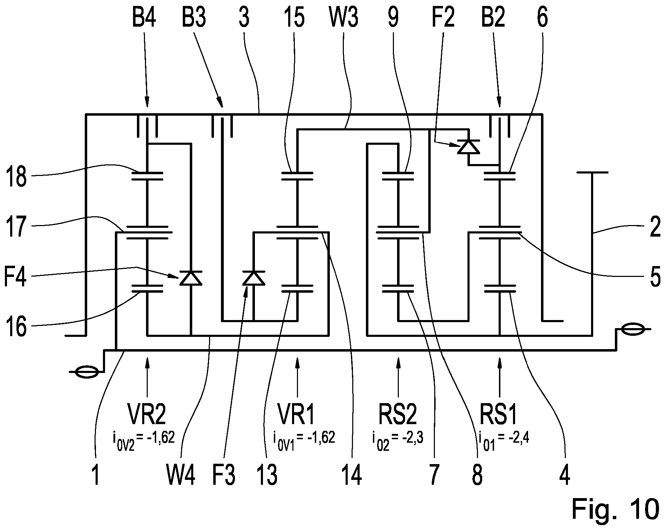

In Figur 10 wird eine siebte Ausführungsvariante des Mehrstufengetriebes als 8 Gang-Variante gezeigt, bei der in axialer Reihenfolge der zweite Vorschaltradsatz VR2 als Minus-Planetenradsatz, der erste Vorschaltradsatz VR1 als Minus-Planetenradsatz, der zweite Planetenradsatz RS2 als Minus-Planetenradsatz und der erste Planetenradsatz RS1 als Minus-Planetenradsatz vorgesehen sind. Ferner sind die Standübersetzung i_{0V2} des zweiten Vorschaltradsatzes VR2, die Standübersetzung i_{0V1} des ersten Vorschaltradsatzes VR1, die Standübersetzung i₀₂ des zweiten Planetenradsatzes RS2 und die Standübersetzung i₀₁ des ersten Planetenradsatzes RS1 in Figur 10 angegeben.

Im Einzelnen wird bei der siebten Ausführungsvariante vorgesehen, dass die Getriebeeingangswelle 1 mit dem Planetenradträger 17 des zweiten Vorschaltradsatzes VR2 verbunden ist. Das Sonnenrad 16 des zweiten Vorschaltradsatzes VR2 ist mit dem Planetenradträger 14 des ersten Vorschaltradsatzes VR1 verbunden und über eine vierte Freilaufkupplung F4 mit dem Hohlrad 18 des zweiten Vorschaltradsatzes VR2 verbindbar, wobei das Hohlrad 18 des zweiten Vorschaltradsatzes VR2 über die vierte Bremse B4 festsetzbar ist. Das Sonnenrad 13 des ersten Vorschaltradsatzes VR1 ist über die dritte Bremse B3 festsetzbar und über eine dritte Freilaufkupplung F3 mit dem Planetenradträger 14 des ersten Vorschaltradsatzes VR1 verbindbar. Das Hohlrad 15 des ersten Vorschaltradsatzes VR1 ist mit dem Planetenradträger 8 des zweiten Planetenradsatzes RS2 verbunden und über die zweite Freilaufkupplung F2 mit dem Hohlrad 6 des ersten Planetenradsatzes RS1 verbindbar. Das Hohlrad 9 des zweiten Planetenradsatzes RS2 ist mit der Getriebeausgangswelle 2 und mit dem Sonnenrad 4 des ersten Planetenradsatzes RS1 verbunden, wobei das Sonnenrad 7 des zweiten Planetenradsatzes RS2 mit dem Planetenradträger 5 des ersten Planetenradsatzes RS1 verbunden ist und wobei das Hohlrad 6 des ersten Planetenradsatzes RS1 über die zweite Bremse B2 festsetzbar ist.

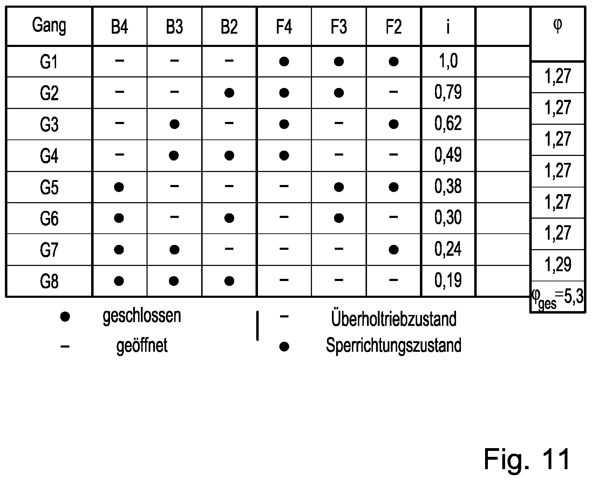

In Figur 11 ist ein Schaltschema für die siebente Ausführungsvariante gemäß Figur 10 dargestellt. Aus dem Schaltschema ergibt sich, dass zum Schalten eines ersten Ganges G1 die zweite, dritte und vierte Bremse B2, B3, B4 geöffnet sind, wobei die zweite, dritte und vierte Freilaufkupplung F2, F3, F4 im Sperrrichtungszustand sind. Zum Schalten eines zweiten Ganges G2 ist die zweite Bremse B2 geschlossen und die dritte und vierte Bremse B3, B4 sind geöffnet, wobei die zweite Freilaufkupplung F2 im Überholtriebzustand ist und die dritte und vierte Freilaufkupplung F3, F4 im Sperrrichtungszustand sind. Zum Schalten eines dritten Ganges G3 ist die dritte Bremse B3 geschlossen und die zweite und vierte Bremse B2, B4 sind geöffnet, wobei die dritte Freilaufkupplung F3 im Überholtriebzustand ist und die zweite und vierte Freilaufkupplung F2, F4 im Sperrrichtungszustand sind. Zum Schalten eines vierten Ganges G4 sind die zweite und dritte Bremse B2, B3 geschlossen und die vierte Bremse B4 ist geöffnet, wobei die zweite und dritte Freilaufkupplung F2, F3 im Überholtriebzustand sind und die vierte Freilaufkupplung F4 im Sperrrichtungszustand ist. Zum Schalten eines fünften Ganges G5 ist die vierte Bremse B4 geschlossen und die zweite und dritte Bremse B2, B3 sind geöffnet, wobei die zweite und dritte Freilaufkupplung F2, F3 im Sperrrichtungszustand sind und die vierte Freilaufkupplung F4 im Überholtriebzustand ist. Zum Schalten eines sechsten Ganges G6 sind die zweite und vierte Bremse B2, B4 geschlossen und die dritte Bremse B3 ist geöffnet, wobei die zweite und vierte Freilaufkupplung F2, F4 im Überholtriebzustand sind und die dritte Freilaufkupplung F3 im Sperrrichtungszustand sind. Zum Schalten eines siebenten Ganges G7 ist die zweite Bremse B2 geöffnet und die dritte und vierte Bremse B3, B4 sind geschlossen, wobei die zweite Freilaufkupplung F2 im Sperrrichtungszustand ist und die dritte und vierte Freilaufkupplung F3, F4 im Überholtriebzustand sind. Zum Schalten eines achten Ganges G8 sind die zweite, dritte und vierte Bremse B2, B3, B4 geschlossen, wobei die zweite, dritte und vierte Freilaufkupplung F2, F3, F4 im Überholtriebzustand sind.

Bei den Getriebeschemen gemäß der sechsten und siebten Ausführungsvariante gemäß Figuren 8 und 10 sind ausgehend von den vorherigen Ausführungsvarianten 8 Gang- Varianten realisiert worden, welche Gangsprünge bzw. eine Gesamtspreizung in der Größenordnung der 16 Gang-Varianten aufweisen, wobei die Einzelradsätze und deren Standgetriebeübersetzungen quasi unverändert bleiben. Im Gegensatz zu den 16 Gang-Varianten wird jeweils auf eine Freilaufkupplung F1 bzw. F4 und auf eine Bremse wie B1 bzw. B4 sowie auf einen Radsatz verzichtet, wodurch sich eine Reduzierung bei der Baulänge und bei den Kosten ergibt.

### Bezugszeichen

- 1: Getriebeeingangswelle bzw. Tretkurbelwelle
- 2: Getriebeausgangswelle
- 3: Gehäuse
- 4: Sonnenrad des ersten Planetenradsatzes
- 5: Planetenradträger bzw. Steg des ersten Planetenradsatzes
- 6: Hohlrad des ersten Planetenradsatzes
- 7: Sonnenrad des zweiten Planetenradsatzes
- 8: Planetenradträger des zweiten Planetenradsatzes
- 9: Hohlrad des zweiten Planetenradsatzes
- 10: Sonnenrad des Vorschaltradsatzes
- 11: Planetenradträger des Vorschaltradsatzes
- 12: Hohlrad des Vorschaltradsatzes
- 13: Sonnenrad des ersten Vorschaltradsatzes
- 14: Planetenradträger des ersten Vorschaltradsatzes
- 15: Hohlrad des ersten Vorschaltradsatzes
- 16: Sonnenrad des zweiten Vorschaltradsatzes
- 17: Planetenradträger des zweiten Vorschaltradsatzes
- 18: Hohlrad des zweiten Vorschaltradsatzes
- 19: Sonnenrad des ersten Nachschaltradsatzes
- 20: Planetenradträger des ersten Nachschaltradsatzes
- 21: Hohlrad des ersten Nachschaltradsatzes
- 22: Sonnenrad des zweiten Nachschaltradsatzes
- 23: Planetenradträger des zweiten Nachschaltradsatzes
- 24: Hohlrad des zweiten Nachschaltradsatzes
- 25: Sonnenrad des Nachschaltradsatzes
- 26: Planetenradträger des Nachschaltradsatzes
- 27: Hohlrad des Nachschaltradsatzes
- RS1: erster Planetenradsatz
- RS2: zweiter Planetenradsatz
- VRS: Vorschaltradsatz
- VR1: erster Vorschaltradsatz
- VR2: zweiter Vorschaltradsatz
- NRS: Nachschaltradsatz
- NR1: erster Nachschaltradsatz
- NR2: zweiter Nachschaltradsatz
- B1: erste Bremse
- B2: zweite Bremse
- B3: dritte Bremse
- B4: vierte Bremse
- EM: elektrische Maschine
- F0: nullte Freilaufkupplung
- F1: erste Freilaufkupplung
- F2: zweite Freilaufkupplung
- F3: dritte Freilaufkupplung
- F4: vierte Freilaufkupplung
- G1: erster Gang
- G2: zweiter Gang
- G3: dritter Gang
- G4: vierter Gang
- G5: fünfter Gang
- G6: sechster Gang
- G7: siebter Gang
- G8: achter Gang
- G9: neunter Gang
- G10: zehnter Gang
- G11: elfter Gang
- G12: zwölfter Gang
- G13: dreizehnter Gang
- G14: vierzehnter Gang
- G15: fünfzehnter Gang
- G16: sechszehnter Gang
- i_{0V}: Standübersetzung des Vorschaltradsatzes
- i_{0V1}: Standübersetzung des ersten Vorschaltradsatzes
- i_{0V2}: Standübersetzung des zweiten Vorschaltradsatzes
- i₀₁: Standübersetzung des ersten Planetenradsatzes
- i₀₂: Standübersetzung des zweiten Planetenradsatzes
- i_{0N}: Standübersetzung des Nachschaltradsatzes
- i_{0N1}: Standübersetzung des ersten Nachschaltradsatzes
- i_{0N2}: Standübersetzung des zweiten Nachschaltradsatzes
- i: Übersetzung
- ϕ: Stufung
- ϕ_{ges}: Gesamtstufung
- W3: Zwischenwelle
- W4: Zwischenwelle

## Patentansprüche

1. Mehrstufengetriebe in Planetenbauweise für ein Fahrrad oder ein Pedelec, mit einer Getriebeeingangswelle (1) als Antrieb und einer Getriebeausgangswelle (2) als Abtrieb, mit zumindest drei Planetenradsätzen (VRS, VR1, VR2, RS1, RS2, NRS, NR1, NR2), wobei ein erster Planetenradsatz (RS1) und ein zweiter Planetenradsatz (RS2) als Hauptschaltradsatz ausgeführt sind und zumindest ein weiterer Planetenradsatz (VRS, VR1, VR2, NRS, NR1, NR2) als Vorschaltradsatz oder als Nachschaltradsatz ausgeführt ist, wobei zumindest drei Freilaufkupplungen (F1, F2, F3, F4) und zumindest drei Bremsen (B1, B2, B3, B4) zum Realisieren von zumindest acht Gängen (G1, G2, G3, G4, G5, G6, G7, G8, G9, G10, G11, G12, G13, G14, G15, G16) vorgesehen sind, **dadurch gekennzeichnet, dass** ein Planetenradträger (5) des ersten Planetenradsatzes (RS1) mit einem Sonnenrad (7) des zweiten Planetenradsatzes (RS2) verbunden ist, wobei ein Hohlrad (6) des ersten Planetenradsatzes (RS1) über eine zweite Bremse (B2) festsetzbar ist und über eine zweite Freilaufkupplung (F2) mit einem Planetenradträger (8) des zweiten Planetenradsatzes (RS2) oder mit einem Hohlrad (9) des zweiten Planetenradsatzes (RS2) verbindbar ist, wobei der Planetenradträger (8) des zweiten Planetenradsatzes (RS2) mit der Getriebeeingangswelle (1) oder mit einem Radsatzelement als Ausgang eines Vorschaltradsatzes (VR1, VRS) verbunden ist, wobei das Hohlrad (9) des zweiten Planetenradsatzes (RS2) mit der Getriebeausgangswelle (2) oder mit einem Radsatzelement als Eingang eines Nachschaltradsatzes (NRS, NR1) verbunden ist, wobei entweder ein Sonnenrad (4) des ersten Planetenradsatzes (RS1) über eine erste Bremse (B1) festsetzbar ist und über eine erste Freilaufkupplung (F1) mit dem Planetenradträger (8) des zweiten Planetenradsatzes (RS2) oder mit dem Hohlrad (9) des zweiten Planetenradsatzes (RS2) verbindbar ist, oder ein Sonnenrad (4) des ersten Planetenradsatzes (RS1) mit dem Planetenradträger (8) des zweiten Planetenradsatzes (RS2) oder mit dem Hohlrad (9) des zweiten Planetenradsatzes (RS2) verbunden ist.

2. Mehrstufengetriebe nach Anspruch 1, **dadurch gekennzeichnet, dass** bei den als Minus-Radsatz ausgeführten Vorschaltradsätzen (VRS, VR1, VR2) und Nachschaltradsätzen (NRS, NR1, NR2) ein erstes Radsatzelement als Eingang ein Planetenradträger (11, 14, 17, 20, 23, 26) ist, ein zweites Radsatzelement als Ausgang ein Sonnenrad (10, 13, 16, 19, 22, 25) oder ein Hohlrad (12, 15, 18, 21, 24, 27) ist und ein drittes, über eine dritte Bremse (B3) oder eine vierte Bremse (B4) festgesetztes Radsatzelement das verbleibende Hohlrad (12, 15, 18, 21, 24, 27) oder das verbleibende Sonnenrad (10, 13, 16, 19, 22, 25) ist.

3. Mehrstufengetriebe nach Anspruch 1 oder 2, **dadurch gekennzeichnet, dass** bei den als Plus-Radsatz ausgeführten Vorschaltradsätzen (VRS, VR1, VR2) und den Nachschaltradsätzen (NRS, NR1, NR2) ein erstes Radsatzelement als Eingang ein Hohlrad (12, 15, 18, 21, 24, 27) ist, ein zweites Radsatzelement als Ausgang ein Sonnenrad (10, 13, 16, 19, 22, 25) oder ein Planetenradträger (11, 14, 17, 20, 23, 26) ist und ein drittes, über eine dritte Bremse (B3) oder eine vierte Bremse (B4) festgesetztes Radsatzelement das verbleibende Sonnenrad (10, 13, 16, 19, 22, 25) oder der verbleibende Planetenradträger (11, 14, 17, 20, 23, 26) ist.

4. Mehrstufengetriebe nach einem der vorangehenden Ansprüche, **dadurch gekennzeichnet, dass** als Bremsen (B1, B2, B3, B4) Freilaufbremsen vorgesehen sind.

5. Mehrstufengetriebe nach einem der vorangehenden Ansprüche, **dadurch gekennzeichnet, dass** zumindest eine elektrische Maschine (EM) vorgesehen ist.

6. Mehrstufengetriebe nach einem der vorangehenden Ansprüche, **dadurch gekennzeichnet, dass** in axialer Reihenfolge ein Vorschaltradsatz (VRS) als Minus-Planetenradsatz, der zweite Planetenradsatz (RS2) als Minus-Planetenradsatz, der erste Planetenradsatz (RS1) als Minus-Planetenradsatz und ein Nachschaltradsatz (NRS) als Minus-Planetenradsatz vorgesehen sind.

7. Mehrstufengetriebe nach Anspruch 6, **dadurch gekennzeichnet, dass** die Getriebeeingangswelle (1) mit dem Planetenradträger (11) des Vorschaltradsatzes (VRS) verbunden ist, dass das Sonnenrad (10) des Vorschaltradsatzes (VRS) über die dritte Bremse (B3) festsetzbar ist und über eine dritte Freilaufkupplung (F3) sowohl mit dem Hohlrad (12) des Vorschaltradsatzes (VRS) als auch mit dem Planetenradträger (8) des zweiten Planetenradsatzes (RS2) sowie über die zweite Freilaufkupplung (F2) des zweiten Planetenradsatzes (RS2) mit dem Hohlrad (6) des ersten Planetenradsatzes (RS1) verbindbar ist, dass das Hohlrad (9) des zweiten Planetenradsatzes (RS2) mit dem Planetenradträger (26) des Nachschaltradsatzes (NRS) verbunden ist sowie über die erste Freilaufkupplung (F1) mit dem Sonnenrad (4) des ersten Planetenradsatzes (RS1) verbindbar ist, dass das Sonnenrad (7) des zweiten Planetenradsatzes (RS2) mit dem Planetenradträger (5) des ersten Planetenradsatzes (RS1) verbunden ist, dass das Hohlrad (27) des Nachschaltradsatzes (NRS) über die vierte Bremse (B4) festsetzbar ist und über die vierte Freilaufkupplung (F4) mit der Getriebeausgangswelle (2) verbindbar ist und dass das Sonnenrad (25) des Nachschaltradsatzes (NRS) mit der Getriebeausgangswelle (2) verbunden ist.

8. Mehrstufengetriebe nach einem der Ansprüche 1 bis 5, **dadurch gekennzeichnet, dass** in axialer Reihenfolge ein zweiter Vorschaltradsatz (VR2) als Minus-Planetenradsatz, ein erster Vorschaltradsatz (VR1) als Minus-Planetenradsatz, der zweite Planetenradsatz (RS2) als Minus-Planetenradsatz und der erste Planetenradsatz (RS1) als Minus-Planetenradsatz vorgesehen sind.

9. Mehrstufengetriebe nach Anspruch 8, **dadurch gekennzeichnet, dass** die Getriebeeingangswelle (1) mit dem Planetenradträger (17) des zweiten Vorschaltradsatzes (VR2) verbunden ist, dass das Hohlrad (18) des zweiten Vorschaltradsatzes (VR2) über die vierte Bremse (B4) festsetzbar ist, dass das Sonnenrad (16) des zweiten Vorschaltradsatzes (VR2) mit dem Planetenradträger (14) des ersten Vorschaltradsatzes (VR1) verbunden ist und über eine vierte Freilaufkupplung (F4) mit dem Hohlrad (18) des zweiten Vorschaltradsatzes (VR2) verbindbar ist, dass das Sonnenrad (13) des ersten Vorschaltradsatzes (VR1) über die dritte Bremse (B3) festsetzbar ist und über eine dritte Freilaufkupplung (F3) mit dem Planetenradträger (14) des ersten Vorschaltradsatzes (VR1) verbindbar ist, dass das Hohlrad (15) des ersten Vorschaltradsatzes (VR1) mit dem Planetenradträger (8) des zweiten Planetenradsatzes (RS2) verbunden ist und über die zweite Freilaufkupplung (F2) mit dem Hohlrad (6) des ersten Planetenradsatzes (RS1) verbindbar ist, dass das Sonnenrad (7) des zweiten Planetenradsatzes (RS2) mit dem Planetenradträger (5) des ersten Planetenradsatzes (RS1) verbunden ist, dass das Hohlrad (9) des zweiten Planetenradsatzes (RS2) mit der Getriebeausgangswelle (2) verbunden ist und über die erste Freilaufkupplung (F1) mit dem Sonnenrad (4) des ersten Planetenradsatzes (RS1) verbindbar ist.

10. Mehrstufengetriebe nach einem der Ansprüche 1 bis 5, **dadurch gekennzeichnet, dass** in axialer Reihenfolge der erste Planetenradsatz (RS1) als Minus-Planetenradsatz, der zweite Planetenradsatz (RS2) als Minus-Planetenradsatz, ein erster Nachschaltradsatz (NR1) als Minus-Planetenradsatz und ein zweiter Nachschaltradsatz (NR2) als Minus-Planetenradsatz vorgesehen sind.

11. Mehrstufengetriebe nach Anspruch 10, **dadurch gekennzeichnet, dass** die Getriebeeingangswelle (1) mit dem Planetenradträger (8) des zweiten Planetenradsatzes (RS2) verbunden ist, dass das Sonnenrad (7) des zweiten Planetenradsatzes (RS2) mit dem Planetenradträger (5) des ersten Planetenradsatzes (RS1) verbunden ist, dass das Hohlrad (9) des zweiten Planetenradsatzes (2) mit dem Planetenradträger (20) des ersten Nachschaltradsatzes (NR1) verbunden ist und über die zweite Freilaufkupplung (F2) mit dem Hohlradrad (6) des ersten Planetenradsatzes (RS1) verbindbar ist, dass das Hohlrad (6) des ersten Planetenradsatzes (RS1) über die zweite Bremse (B2) festsetzbar ist, dass das Sonnenrad (4) des ersten Planetenradsatzes (RS1) über die erste Bremse (B1) festsetzbar ist und über die erste Freilaufkupplung (F1) mit der Getriebeeingangswelle (1) verbindbar ist, dass das Sonnenrad (19) des ersten Nachschaltradsatzes (NR1) über die dritte Bremse (B3) festsetzbar ist und über eine dritte Freilaufkupplung (F3) mit dem Hohlrad (21) des ersten Nachschaltradsatzes (NR1) verbindbar ist, dass das Hohlrad (21) des ersten Nachschaltradsatzes (NR1) mit dem Planetenradträger (23) des zweiten Nachschaltradsatzes (NR2) verbunden ist, dass das Sonnenrad (22) des zweiten Nachschaltradsatzes (NR2) mit der Getriebeausgangswelle (2) verbunden ist und über eine vierte Freilaufkupplung (F4) mit dem Hohlrad (24) des zweiten Nachschaltradsatzes (NR2) verbindbar ist, und dass das Hohlrad (24) des zweiten Nachschaltradsatzes (NR2) über die vierte Bremse (B4) festsetzbar ist.

12. Mehrstufengetriebe nach einem der Ansprüche 1 bis 5, **dadurch gekennzeichnet, dass** in axialer Reihenfolge ein zweiter Vorschaltradsatz (VR2) mit einem Stufenplaneten als Minus-Planetenradsatz, ein erster Vorschaltradsatz (VR1) als Minus-Planetenradsatz, der zweite Planetenradsatz (RS2) mit einem Stufenplaneten als Minus-Planetenradsatz und der erste Planetenradsatz (RS1) als Minus-Planetenradsatz vorgesehen sind.

13. Mehrstufengetriebe nach Anspruch 12, **dadurch gekennzeichnet, dass** die Getriebeeingangswelle (1) mit dem Planetenradträger (17) des zweiten Vorschaltradsatzes (VR2) verbunden ist und über eine vierte Freilaufkupplung (F4) mit dem Hohlrad (18) des zweiten Vorschaltradsatzes (VR2) verbindbar ist, dass das Sonnenrad (16) des zweiten Vorschaltradsatzes (VR2) über die vierte Bremse (B4) festsetzbar ist, dass das Hohlrad (18) des zweiten Vorschaltradsatzes (VR2) mit dem Planetenradträger (14) des ersten Vorschaltradsatzes (VR1) verbunden ist und über eine dritte Freilaufkupplung (F3) mit dem Hohlrad (15) des ersten Vorschaltradsatzes (VR1) verbindbar ist, dass das Sonnenrad (13) des ersten Vorschaltradsatzes (VR1) über die dritte Bremse (B3) festsetzbar ist, dass das Hohlrad (15) des ersten Vorschaltradsatzes (VR1) mit dem Planetenradträger (8) des zweiten Planetenradsatzes (RS2) verbunden ist und über die zweite Freilaufkupplung (F2) mit dem Hohlrad (6) des ersten Planetenradsatzes (RS1) verbindbar ist, dass das Hohlrad (9) des zweiten Planetenradsatzes (2) mit der Getriebeausgangswelle (2) verbunden ist und über die erste Freilaufkupplung (F1) mit dem Sonnenrad (4) des ersten Planetenradsatzes (RS1) verbindbar ist, und dass das Sonnenrad (7) des zweiten Planetenradsatzes (RS2) mit dem Planetenradträger (5) des ersten Planetenradsatzes (RS1) verbunden ist.

14. Mehrstufengetriebe nach einem der Ansprüche 1 bis 5, **dadurch gekennzeichnet, dass** in axialer Reihenfolge ein zweiter Vorschaltradsatz (VR2) als Plus-Planetenradsatz, ein erster Vorschaltradsatz (VR1) als Plus-Planetenradsatz, der zweite Planetenradsatz (RS2) als Minus-Planetenradsatz und der erste Planetenradsatz (RS1) als Minus-Planetenradsatz vorgesehen sind.

15. Mehrstufengetriebe nach Anspruch 14, **dadurch gekennzeichnet, dass** die Getriebeeingangswelle (1) mit dem Hohlrad (18) des zweiten Vorschaltradsatzes (VR2) verbunden ist, dass das Sonnenrad (16) des zweiten Vorschaltradsatzes (VR2) über die vierte Bremse (B4) festsetzbar ist und über eine vierte Freilaufkupplung (F4) mit dem Planetenradträger (17) des zweiten Vorschaltradsatzes (VR2) verbindbar ist, dass der Planetenradträger (17) des zweiten Vorschaltradsatzes (VR2) mit dem Hohlrad (15) des ersten Vorschaltradsatzes (VR1) verbunden ist, dass das Hohlrad (15) des ersten Vorschaltradsatzes (VR1) über eine dritte Freilaufkupplung (F3) mit dem Planetenradträger (14) des ersten Vorschaltradsatzes (VR1) verbindbar ist, dass das Sonnenrad (13) des ersten Vorschaltradsatzes (VR1) über die dritte Bremse (B3) festsetzbar ist, dass der Planetenradträger (14) des ersten Vorschaltradsatzes (VR1) mit dem Planetenradträger (8) des zweiten Planetenradsatzes (RS2) verbunden ist und über die zweite Freilaufkupplung (F2) des zweiten Planetenradsatzes (RS2) mit dem Hohlrad (6) des ersten Planetenradsatzes (RS1) verbindbar ist, und dass das Hohlrad (9) des zweiten Planetenradsatzes (RS2) mit der Getriebeausgangswelle (2) verbunden ist und über die erste Freilaufkupplung (F1) mit dem Sonnenrad (4) des ersten Planetenradsatzes (RS1) verbindbar ist.

16. Mehrstufengetriebe nach einem der Ansprüche 6 bis 15, **dadurch gekennzeichnet, dass** zum Schalten eines ersten Ganges (G1) die erste, zweite, dritte und vierte Bremse (B1, B2, B3, B4) geöffnet sind, wobei die erste, zweite, dritte und vierte Freilaufkupplung (F1, F2, F3, F4) im Sperrrichtungszustand sind, oder dass zum Schalten eines zweiten Ganges (G2) die erste Bremse (B1) geschlossen ist und die zweite, dritte und vierte Bremse (B2, B3, B4) geöffnet sind, wobei die erste Freilaufkupplung (F1) im Überholtriebzustand ist und die zweite, dritte und vierte Freilaufkupplung (F2, F3, F4) im Sperrrichtungszustand sind, oder dass zum Schalten eines dritten Ganges (G3) die zweite Bremse (B2) geschlossen ist und die erste, dritte und vierte Bremse (B1, B3, B4) geöffnet sind, wobei die zweite Freilaufkupplung (F2) im Überholtriebzustand ist und die erste, dritte und vierte Freilaufkupplung (F1, F3, F4) im Sperrrichtungszustand sind, oder dass zum Schalten eines vierten Ganges (G4) die erste und die zweite Bremse (B1, B2) geschlossen sind und die dritte und vierte Bremse (B3, B4) geöffnet sind, wobei die erste und zweite Freilaufkupplung (F1, F2) im Überholtriebzustand sind und die dritte und vierte Freilaufkupplung (F3, F4) im Sperrrichtungszustand sind, oder dass zum Schalten eines fünften Ganges (G5) die dritte Bremse (B3) geschlossen ist und die erste, zweite und vierte Bremse (B1, B2, B4) geöffnet sind, wobei die erste, zweite und vierte Freilaufkupplung (F1, F2, F4) im Sperrrichtungszustand sind und die dritte Freilaufkupplung (F3) im Überholtriebzustand ist, oder dass zum Schalten eines sechsten Ganges (G6) die erste und dritte Bremse (B1, B3) geschlossen sind und die zweite und vierte Bremse (B2, B4) geöffnet sind, wobei die erste und dritte Freilaufkupplung (F1, F3) im Überholtriebzustand sind und die zweite und vierte Freilaufkupplung (F2, F4) im Sperrrichtungszustand sind, oder dass zum Schalten eines siebenten Ganges (G7) die erste und vierte Bremse (B1, B4) geöffnet sind und die zweite und dritte Bremse (B2, B3) geschlossen sind, wobei die erste und vierte Freilaufkupplung (F1, F4) im Sperrrichtungszustand sind und die zweite und dritte Freilaufkupplung (F2, F3) im Überholtriebzustand sind, oder dass zum Schalten eines achten Ganges (G8) die erste, zweite und dritte Bremse (B1, B2, B3) geschlossen sind und die vierte Bremse (B4) geöffnet ist, wobei die erste, zweite und dritte Freilaufkupplung (F1, F2, F3) im Überholtriebzustand sind und die vierte Freilaufkupplung (F4) im Sperrrichtungszustand ist, oder dass zum Schalten eines neunten Ganges (G9) die erste, zweite und dritte Bremse (B1, B2, B3) geöffnet sind und die vierte Bremse (B4) geschlossen ist, wobei die erste, zweite und dritte Freilaufkupplung (F1, F2, F3) im Sperrrichtungszustand sind und die vierte Freilaufkupplung (F4) im Überholtriebzustand ist, oder dass zum Schalten eines zehnten Ganges (G10) die erste und vierte Bremse (B1, B4) geschlossen sind und die zweite und dritte Bremse (B2, B3) geöffnet sind, wobei die erste und vierte Freilaufkupplung (F1, F4) im Überholtriebzustand sind und die zweite und dritte Freilaufkupplung (F2, F3) im Sperrrichtungszustand sind, oder dass zum Schalten eines elften Ganges (G11) die erste und dritte Bremse (B1, B3) geöffnet sind und die zweite und vierte Bremse (B2, B4) geschlossen sind, wobei die erste und dritte Freilaufkupplung (F1, F3) im Sperrrichtungszustand sind und die zweite und vierte Freilaufkupplung (F2, F4) im Überholtriebzustand sind, oder dass zum Schalten eines zwölften Ganges (G12) die erste, zweite und vierte Bremse (B1, B2, B4) geschlossen sind und die dritte Bremse (B3) geöffnet ist, wobei die erste, zweite und vierte Freilaufkupplung (F1, F2, F4) im Überholtriebzustand sind und die dritte Freilaufkupplung (F3) im Sperrrichtungszustand sind, dass zum Schalten eines dreizehnten Ganges (G13) die erste und zweite Bremse (B1, B2) geöffnet sind und die dritte und vierte Bremse (B3, B4) geschlossen sind, wobei die erste und zweite Freilaufkupplung (F1, F2) im Sperrrichtungszustand sind und die dritte und vierte Freilaufkupplung (F3, F4) im Überholtriebzustand sind, oder dass zum Schalten eines vierzehnten Ganges (G14) die erste, dritte und vierte Bremse (B1, B3, B4) geschlossen sind und die zweite Bremse (B2) geöffnet ist, wobei die erste, dritte und vierte Freilaufkupplung (F1, F3, F4) im Überholtriebzustand sind und die zweite Freilaufkupplung (F2) im Sperrrichtungszustand ist, oder dass zum Schalten eines fünfzehnten Ganges (G15) die erste Bremse (B1) geöffnet ist und die zweite, dritte und vierte Bremse (B2, B3, B4) geschlossen sind, wobei die erste Freilaufkupplung (F1) im Sperrrichtungszustand ist und die zweite, dritte und vierte Freilaufkupplung (F2, F3, F4) im Überholtriebzustand sind, oder das zum Schalten eines sechzehnten Ganges (G16) die erste, zweite, dritte und vierte Bremse (B1, B2, B3, B4) geschlossen sind, wobei die erste, zweite, dritte und vierte Freilaufkupplung (F1, F2, F3, F4) im Überholtriebzustand sind.

17. Mehrstufengetriebe nach einem der Ansprüche 1 bis 5, **dadurch gekennzeichnet, dass** in axialer Reihenfolge der Vorschaltradsatz (VRS) als Minus-Planetenradsatz, der zweite Planetenradsatz (RS2) als Minus-Planetenradsatz und der erste Planetenradsatz (RS1) als Minus-Planetenradsatz vorgesehen sind.

18. Mehrstufengetriebe nach Anspruch 17, **dadurch gekennzeichnet, dass** die Getriebeeingangswelle (1) mit dem Planetenradträger (11) des Vorschaltradsatzes (VRS) verbunden ist, dass das Sonnenrad (10) des Vorschaltradsatzes (VRS) über die dritte Bremse (B3) festsetzbar ist und über eine dritte Freilaufkupplung (F3) mit dem Hohlrad (12) des Vorschaltradsatzes (VRS) verbindbar ist, dass das Hohlrad (12) des Vorschaltradsatzes (VHS) mit dem Planetenradträger (8) des zweiten Planetenradsatzes (RS2) verbunden ist und über die zweite Freilaufkupplung (F2) mit dem Hohlrad (6) des ersten Planetenradsatzes (RS1) verbindbar ist, dass das Hohlrad (9) des zweiten Planetenradsatzes (RS2) mit der Getriebeausgangswelle (2) verbunden ist und über die erste Freilaufkupplung (F1) des ersten Planetenradsatzes (RS1) mit dem Sonnenrad (4) des ersten Planetenradsatzes RS1) verbindbar ist, und dass das Sonnenrad (7) des zweiten Planetenradsatzes (RS2) mit dem Planetenradträger (5) des ersten Planetenradsatzes (RS1) verbunden ist.

19. Mehrstufengetriebe nach einem der Ansprüche 17 oder 18, **dadurch gekennzeichnet, dass** zum Schalten eines ersten Ganges (G1) die erste, zweite und dritte Bremse (B1, B2, B3) geöffnet sind, wobei die erste, zweite und dritte Freilaufkupplung (F1, F2, F3) im Sperrrichtungszustand sind, oder dass zum Schalten eines zweiten Ganges (G2) die erste Bremse (B1) geschlossen ist und die zweite und dritte Bremse (B2, B3) geöffnet sind, wobei die erste Freilaufkupplung (F1) im Überholtriebzustand ist und die zweite und dritte Freilaufkupplung (F2, F3) im Sperrrichtungszustand sind, oder dass zum Schalten eines dritten Ganges (G3) die zweite Bremse (B2) geschlossen ist und die erste und dritte Bremse (B1, B3) geöffnet sind, wobei die zweite Freilaufkupplung (F2) im Überholtriebzustand ist und die erste und dritte Freilaufkupplung (F1, F3) im Sperrrichtungszustand sind, oder dass zum Schalten eines vierten Ganges (G4) die erste und zweite Bremse (B1, B2) geschlossen sind und die dritte Bremse (B3) geöffnet ist, wobei die erste und zweite Freilaufkupplung (F1, F2) im Überholtriebzustand sind und die dritte Freilaufkupplung (F3) im Sperrrichtungszustand ist, oder dass zum Schalten eines fünften Ganges (G5) die dritte Bremse (B3) geschlossen ist und die erste und zweite Bremse (B1, B2) geöffnet sind, wobei die erste und zweite Freilaufkupplung (F1, F2) im Sperrrichtungszustand sind und die dritte Freilaufkupplung (F3) im Überholtriebzustand ist, oder dass zum Schalten eines sechsten Ganges (G6) die erste und dritte Bremse (B1, B3) geschlossen sind und die zweite Bremse (B2) geöffnet ist, wobei die erste und dritte Freilaufkupplung (F1, F3) im Überholtriebzustand sind und die zweite Freilaufkupplung (F2) im Sperrrichtungszustand sind, oder dass zum Schalten eines siebenten Ganges (G7) die erste Bremse (B1) geöffnet ist und die zweite und dritte Bremse (B2, B3) geschlossen sind, wobei die erste Freilaufkupplung (F1) im Sperrrichtungszustand ist und die zweite und dritte Freilaufkupplung (F2, F3) im Überholtriebzustand sind, oder dass zum Schalten eines achten Ganges (G8) die erste, zweite und dritte Bremse (B1, B2, B3) geschlossen sind, wobei die erste, zweite und dritte Freilaufkupplung (F1, F2, F3) im Überholtriebzustand sind.

20. Mehrstufengetriebe nach einem der Ansprüche 1 bis 5, **dadurch gekennzeichnet, dass** in axialer Reihenfolge der zweite Vorschaltradsatz (VR2) als Minus-Planetenradsatz, der erste Vorschaltradsatz (VR1) als Minus-Planetenradsatz, der zweite Planetenradsatz (RS2) als Minus-Planetenradsatz und der erste Planetenradsatz (RS1) als Minus-Planetenradsatz vorgesehen sind.

21. Mehrstufengetriebe nach Anspruch 20, **dadurch gekennzeichnet, dass** die Getriebeeingangswelle (1) mit dem Planetenradträger (17) des zweiten Vorschaltradsatzes (VR2) verbunden ist, dass das Sonnenrad (16) des zweiten Vorschaltradsatzes (VR2) mit dem Planetenradträger (14) des ersten Vorschaltradsatzes (VR1) verbunden ist und über eine vierte Freilaufkupplung (F4) mit dem Hohlrad (18) des zweiten Vorschaltradsatzes (VR2) verbindbar ist, dass das Hohlrad (18) des zweiten Vorschaltradsatzes (VR2) über die vierte Bremse (B4) festsetzbar ist, dass das Sonnenrad (13) des ersten Vorschaltradsatzes (VR1) über die dritte Bremse (B3) festsetzbar ist und über eine dritte Freilaufkupplung (F3) mit dem Planetenradträger (14) des ersten Vorschaltradsatzes (VR1) verbindbar ist, dass das Hohlrad (15) des ersten Vorschaltradsatzes (VR1) mit dem Planetenradträger (8) des zweiten Planetenradsatzes (RS2) verbunden ist und über die zweite Freilaufkupplung (F2) mit dem Hohlrad (6) des ersten Planetenradsatzes (RS1) verbindbar ist, dass das Hohlrad (9) des zweiten Planetenradsatzes (RS2) mit der Getriebeausgangswelle (2) und mit dem Sonnenrad (4) des ersten Planetenradsatzes (RS1) verbunden ist, und dass das Sonnenrad (7) des zweiten Planetenradsatzes (RS2) mit dem Planetenradträger (5) des ersten Planetenradsatzes (RS1) verbunden ist.

22. Mehrstufengetriebe nach einem der Ansprüche 20 oder 21, **dadurch gekennzeichnet, dass** zum Schalten eines ersten Ganges (G1) die zweite, dritte und vierte Bremse (B2, B3, B4) geöffnet sind, wobei die zweite, dritte und vierte Freilaufkupplung (F2, F3, F4) im Sperrrichtungszustand sind, oder dass zum Schalten eines zweiten Ganges (G2) die zweite Bremse (B2) geschlossen ist und die dritte und vierte Bremse (B3, B4) geöffnet sind, wobei die zweite Freilaufkupplung (F2) im Überholtriebzustand ist und die dritte und vierte Freilaufkupplung (F3, F4) im Sperrrichtungszustand sind, oder dass zum Schalten eines dritten Ganges (G3) die dritte Bremse (B3) geschlossen ist und die zweite und vierte Bremse (B2, B4) geöffnet sind, wobei die dritte Freilaufkupplung (F3) im Überholtriebzustand ist und die zweite und vierte Freilaufkupplung (F2, F4) im Sperrrichtungszustand sind, oder dass zum Schalten eines vierten Ganges (G4) die zweite und dritte Bremse (B2, B3) geschlossen sind und die vierte Bremse (B4) geöffnet ist, wobei die zweite und dritte Freilaufkupplung (F2, F3) im Überholtriebzustand sind und die vierte Freilaufkupplung (F4) im Sperrrichtungszustand ist, oder dass zum Schalten eines fünften Ganges (G5) die vierte Bremse (B4) geschlossen ist und die zweite und dritte Bremse (B2, B3) geöffnet sind, wobei die zweite und dritte Freilaufkupplung (F2, F3) im Sperrrichtungszustand sind und die vierte Freilaufkupplung (F4) im Überholtriebzustand ist, oder dass zum Schalten eines sechsten Ganges (G6) die zweite und vierte Bremse (B2, B4) geschlossen sind und die dritte Bremse (B3) geöffnet ist, wobei die zweite und vierte Freilaufkupplung (F2, F4) im Überholtriebzustand sind und die dritte Freilaufkupplung (F3) im Sperrrichtungszustand sind, oder dass zum Schalten eines siebenten Ganges (G7) die zweite Bremse (B2) geöffnet ist und die dritte und vierte Bremse (B3, B4) geschlossen sind, wobei die zweite Freilaufkupplung (F2) im Sperrrichtungszustand ist und die dritte und vierte Freilaufkupplung (F3, F4) im Überholtriebzustand sind, oder dass zum Schalten eines achten Ganges (G8) die zweite, dritte und vierte Bremse (B2, B3, B4) geschlossen sind, wobei die zweite, dritte und vierte Freilaufkupplung (F2, F3, F4) im Überholtriebzustand sind.

23. Mehrstufengetriebe nach einem der vorangehenden Ansprüche, **dadurch gekennzeichnet, dass** das Mehrstufengetriebe als Tretlagergetriebe mit koaxial zueinander angeordneten Planetenradsätzen (VRS, VR1, VR2, RS1, RS2, NRS, NR1, NR2) ausgeführt ist.

24. Mehrstufengetriebe nach Anspruch 5, **dadurch gekennzeichnet, dass** die Getriebeeingangswelle (1) über eine nullte Freilaufkupplung (F0) mit der elektrischen Maschine (EM) verbindbar ist.

25. Fahrrad oder Pedelec mit einem Mehrstufengetriebe nach einem der vorangehenden Ansprüche.

## Claims

1. Multi-stage planetary transmission for a bicycle or a pedelec, having a transmission input shaft (1) as input drive and a transmission output shaft (2) as output drive, having at least three planetary gear sets (VRS, VR1, VR2, RS1, RS2, NRS, NR1, NR2), a first planetary gear set (RS1) and a second planetary gear set (RS2) being designed as a main shifting gear set and at least one further planetary gear set (VRS, VR1, VR2, NRS, NR1, NR2) being designed as a front-mounted gear set or as a rear-mounted gear set, wherein at least three free-wheel clutches (F1, F2, F3, F4) and at least three brakes (B1, B2, B3, B4) are provided for realising at least eight gears (G1, G2, G3, G4, G5, G6, G7, G8, G9, G10, G11, G12, G13, G14, G15, G16), **characterized in that** a planet carrier (5) of the first planetary gear set (RS1) is connected to a sun gear (7) of the second planetary gear set (RS2), wherein a ring gear (6) of the first planetary gear set (RS1) is fixable via a second brake (B2) and is connectable via a second free-wheel clutch (F2) to a planet carrier (8) of the second planetary gear set (RS2) or to a ring gear (9) of the second planetary gear set (RS2), wherein the planet carrier (8) of the second planetary gear set (RS2) is connected to the transmission input shaft (1) or to a gear set element as output of a front-mounted gear set (VR1, VRS), wherein the ring gear (9) of the second planetary gear set (RS2) is connected to the transmission output shaft (2) or to a gear set element as input of a rear-mounted gear set (NRS, NR1), wherein either a sun gear (4) of the first planetary gear set (RS1) is fixable via a first brake (B1) and is connectable via a first free-wheel clutch (F1) to the planet carrier (8) of the second planetary gear set (RS2) or to the ring gear (9) of the second planetary gear set (RS2), or a sun gear (4) of the first planetary gear set (RS1) is connected to the planet carrier (8) of the second planetary gear set (RS2) or to the ring gear (9) of the second planetary gear set (RS2).

2. Multi-stage transmission according to Claim 1, **characterized in that** in the case of the front-mounted gear sets (VRS, VR1, VR2) and rear-mounted gear sets (NRS, NR1, NR2) designed as a minus gear set, a first gear set element as the input is a planet carrier (11, 14, 17, 20, 23, 26), a second gear set element as the output is a sun gear (10, 13, 16, 19, 22, 25) or a ring gear (12, 15, 18, 21, 24, 27), and a third gear set element which is fixed via a third brake (B3) or a fourth brake (B4) is the remaining ring gear (12, 15, 18, 21, 24, 27) or the remaining sun gear (10, 13, 16, 19, 22, 25).

3. Multi-stage transmission according to Claim 1 or 2, **characterized in that** in the case of the front-mounted gear sets (VRS, VR1, VR2) and the rear-mounted gear sets (NRS, NR1, NR2) designed as a plus gear set, a first gear set element as the input is a ring gear (12, 15, 18, 21, 24, 27), a second gear set element as the output is a sun gear (10, 13, 16, 19, 22, 25) or a planet carrier (11, 14, 17, 20, 23, 26), and a third gear set element which is fixed via a third brake (B3) or a fourth brake (B4) is the remaining sun gear (10, 13, 16, 19, 22, 25) or the remaining planet carrier (11, 14, 17, 20, 23, 26).

4. Multi-stage transmission according to one of the preceding claims, **characterized in that** free-wheel brakes are provided as the brakes (B1, B2, B3, B4).

5. Multi-stage transmission according to one of the preceding claims, **characterized in that** at least one electric machine (EM) is provided.

6. Multi-stage transmission according to one of the preceding claims, **characterized in that** an axial sequence of a front-mounted gear set (VRS) as a minus planetary gear set, the second planetary gear set (RS2) as a minus planetary gear set, the first planetary gear set (RS1) as a minus planetary gear set and a rear-mounted gear set (NRS) as a minus planetary gear set is provided.

7. Multi-stage transmission according to Claim 6, **characterized in that** the transmission input shaft (1) is connected to the planet carrier (11) of the front-mounted gear set (VRS), **in that** the sun gear (10) of the front-mounted gear set (VRS) is fixable via the third brake (B3) and is connectable via a third free-wheel clutch (F3) both to the ring gear (12) of the front-mounted gear set (VRS) and to the planet carrier (8) of the second planetary gear set (RS2) and via the second free-wheel clutch (F2) of the second planetary gear set (RS2) to the ring gear (6) of the first planetary gear set (RS1), **in that** the ring gear (9) of the second planetary gear set (RS2) is connected to the planet carrier (26) of the rear-mounted gear set (NRS) and is connectable via the first free-wheel clutch (F1) to the sun gear (4) of the first planetary gear set (RS1), **in that** the sun gear (7) of the second planetary gear set (RS2) is connected to the planet carrier (5) of the first planetary gear set (RS1), **in that** the ring gear (27) of the rear-mounted gear set (NRS) is fixable via the fourth brake (B4) and is connectable via the fourth free-wheel clutch (F4) to the transmission output shaft (2), and **in that** the sun gear (25) of the rear-mounted gear set (NRS) is connected to the transmission output shaft (2).

8. Multi-stage transmission according to one of Claims 1 to 5, **characterized in that** an axial sequence of a second front-mounted gear set (VR2) as a minus planetary gear set, a first front-mounted gear set (VR1) as a minus planetary gear set, the second planetary gear set (RS2) as a minus planetary gear set and the first planetary gear set (RS1) as a minus planetary gear set is provided.

9. Multi-stage transmission according to Claim 8, **characterized in that** the transmission input shaft (1) is connected to the planet carrier (17) of the second front-mounted gear set (VR2), **in that** the ring gear (18) of the second front-mounted gear set (VR2) is fixable via the fourth brake (B4), **in that** the sun gear (16) of the second front-mounted gear set (VR2) is connected to the planet carrier (14) of the first front-mounted gear set (VR1) and is connectable via a fourth free-wheel clutch (F4) to the ring gear (18) of the second front-mounted gear set (VR2), **in that** the sun gear (13) of the first front-mounted gear set (VR1) is fixable via the third brake (B3) and is connectable via a third free-wheel clutch (F3) to the planet carrier (14) of the first front-mounted gear set (VR1), **in that** the ring gear (15) of the first front-mounted gear set (VR1) is connected to the planet carrier (8) of the second planetary gear set (RS2) and is connectable via the second free-wheel clutch (F2) to the ring gear (6) of the first planetary gear set (RS1), **in that** the sun gear (7) of the second planetary gear set (RS2) is connected to the planet carrier (5) of the first planetary gear set (RS1), **in that** the ring gear (9) of the second planetary gear set (RS2) is connected to the transmission output shaft (2) and is connectable via the first free-wheel clutch (F1) to the sun gear (4) of the first planetary gear set (RS1).

10. Multi-stage transmission according to one of Claims 1 to 5, **characterized in that** an axial sequence of the first planetary gear set (RS1) as a minus planetary gear set, the second planetary gear set (RS2) as a minus planetary gear set, a first rear-mounted gear set (NR1) as a minus planetary gear set and a second rear-mounted gear set (NR2) as a minus planetary gear set is provided.

11. Multi-stage transmission according to Claim 10, **characterized in that** the transmission input shaft (1) is connected to the planet carrier (8) of the second planetary gear set (RS2), **in that** the sun gear (7) of the second planetary gear set (RS2) is connected to the planet carrier (5) of the first planetary gear set (RS1), **in that** the ring gear (9) of the second planetary gear set (2) is connected to the planet carrier (20) of the first rear-mounted gear set (NR1) and is connectable via the second free-wheel clutch (F2) to the ring gear (6) of the first planetary gear set (RS1), **in that** the ring gear (6) of the first planetary gear set (RS1) is fixable via the second brake (B2), **in that** the sun gear (4) of the first planetary gear set (RS1) is fixable via the first brake (B1) and is connectable via the first free-wheel clutch (F1) to the transmission input shaft (1), **in that** the sun gear (19) of the first rear-mounted gear set (NR1) is fixable via the third brake (B3) and is connectable via a third free-wheel clutch (F3) to the ring gear (21) of the first rear-mounted gear set (NR1), **in that** the ring gear (21) of the first rear-mounted gear set (NR1) is connected to the planet carrier (23) of the second rear-mounted gear set (NR2), **in that** the sun gear (22) of the second rear-mounted gear set (NR2) is connected to the transmission output shaft (2) and is connectable via a fourth free-wheel clutch (F4) to the ring gear (24) of the second rear-mounted gear set (NR2), and **in that** the ring gear (24) of the second rear-mounted gear set (NR2) is fixable via the fourth brake (B4).

12. Multi-stage transmission according to one of Claims 1 to 5, **characterized in that** an axial sequence of a second front-mounted gear set (VR2) with a stepped planetary gear as a minus planetary gear set, a first front-mounted gear set (VR1) as a minus planetary gear set, the second planetary gear set (RS2) with a stepped planetary gear as a minus planetary gear set, and the first planetary gear set (RS1) as a minus planetary gear set is provided.

13. Multi-stage transmission according to Claim 12, **characterized in that** the transmission input shaft (1) is connected to the planet carrier (17) of the second front-mounted gear set (VR2) and is connectable via a fourth free-wheel clutch (F4) to the ring gear (18) of the second front-mounted gear set (VR2), **in that** the sun gear (16) of the second front-mounted gear set (VR2) is fixable via the fourth brake (B4), **in that** the ring gear (18) of the second front-mounted gear set (VR2) is connected to the planet carrier (14) of the first front-mounted gear set (VR1) and is connectable via a third free-wheel clutch (F3) to the ring gear (15) of the first front-mounted gear set (VR1), **in that** the sun gear (13) of the first front-mounted gear set (VR1) is fixable via the third brake (B3), **in that** the ring gear (15) of the first front-mounted gear set (VR1) is connected to the planet carrier (8) of the second planetary gear set (RS2) and is connectable via the second free-wheel clutch (F2) to the ring gear (6) of the first planetary gear set (RS1), **in that** the ring gear (9) of the second planetary gear set (2) is connected to the transmission output shaft (2) and is connectable via the first free-wheel clutch (F1) to the sun gear (4) of the first planetary gear set (RS1), and **in that** the sun gear (7) of the second planetary gear set (RS2) is connected to the planet carrier (5) of the first planetary gear set (RS1).

14. Multi-stage transmission according to one of Claims 1 to 5, **characterized in that** an axial sequence of a second front-mounted gear set (VR2) as a plus planetary gear set, a first front-mounted gear set (VR1) as a plus planetary gear set, the second planetary gear set (RS2) as a minus planetary gear set, and the first planetary gear set (RS1) as a minus planetary gear set is provided.

15. Multi-stage transmission according to Claim 14, **characterized in that** the transmission input shaft (1) is connected to the ring gear (18) of the second front-mounted gear set (VR2), **in that** the sun gear (16) of the second front-mounted gear set (VR2) is fixable via the fourth brake (B4) and is connectable via a fourth free-wheel clutch (F4) to the planet carrier (17) of the second front-mounted gear set (VR2), **in that** the planet carrier (17) of the second front-mounted gear set (VR2) is connected to the ring gear (15) of the first front-mounted gear set (VR1), **in that** the ring gear (15) of the first front-mounted gear set (VR1) is connectable via a third free-wheel clutch (F3) to the planet carrier (14) of the first front-mounted gear set (VR1), **in that** the sun gear (13) of the first front-mounted gear set (VR1) is fixable via the third brake (B3), **in that** the planet carrier (14) of the first front-mounted gear set (VR1) is connected to the planet carrier (8) of the second planetary gear set (RS2) and is connectable via the second free-wheel clutch (F2) of the second planetary gear set (RS2) to the ring gear (6) of the first planetary gear set (RS1), and **in that** the ring gear (9) of the second planetary gear set (RS2) is connected to the transmission output shaft (2) and is connectable via the first free-wheel clutch (F1) to the sun gear (4) of the first planetary gear set (RS1).

16. Multi-stage transmission according to one of Claims 6 to 15, **characterized in that**, in order to shift a first gear (G1), the first, second, third and fourth brakes (B1, B2, B3, B4) are disengaged, and the first, second, third and fourth free-wheel clutches (F1, F2, F3, F4) are in the locking direction state, or **in that**, in order to shift a second gear (G2), the first brake (B1) is engaged and the second, third and fourth brakes (B2, B3, B4) are disengaged, and the first free-wheel clutch (F1) is in the overrun driving state and the second, third and fourth free-wheel clutches (F2, F3, F4) are in the locking direction state, or **in that**, in order to shift a third gear (G3), the second brake (B2) is engaged and the first, third and fourth brakes (B1, B3, B4) are disengaged, and the second free-wheel clutch (F2) is in the overrun driving state and the first, third and fourth free-wheel clutches (F1, F3, F4) are in the locking direction state, or **in that**, in order to shift a fourth gear (G4), the first and the second brakes (B1, B2) are engaged and the third and fourth brakes (B3, B4) are disengaged, and the first and second free-wheel clutches (F1, F2) are in the overrun driving state and the third and fourth free-wheel clutches (F3, F4) are in the locking direction state, or **in that**, in order to shift a fifth gear (G5), the third brake (B3) is engaged and the first, second and fourth brakes (B1, B2, B4) are disengaged, and the first, second and fourth free-wheel clutches (F1, F2, F4) are in the locking direction state and the third free-wheel clutch (F3) is in the overrun driving state, or **in that**, in order to shift a sixth gear (G6), the first and third brakes (B1, B3) are engaged and the second and fourth brakes (B2, B4) are disengaged, and the first and third free-wheel clutches (F1, F3) are in the overrun driving state and the second and fourth free-wheel clutches (F2, F4) are in the locking direction state, or **in that**, in order to shift a seventh gear (G7), the first and fourth brakes (B1, B4) are disengaged and the second and third brakes (B2, B3) are engaged, and the first and fourth free-wheel clutches (F1, F4) are in the locking direction state and the second and third free-wheel clutches (F2, F3) are in the overrun driving state, or **in that**, in order to shift an eighth gear (G8), the first, second and third brakes (B1, B2, B3) are engaged and the fourth brake (B4) is disengaged, and the first, second and third free-wheel clutches (F1, F2, F3) are in the overrun driving state and the fourth free-wheel clutch (F4) is in the locking direction state, or **in that**, in order to shift a ninth gear (G9), the first, second and third brakes (B1, B2, B3) are disengaged and the fourth brake (B4) is engaged, and the first, second and third free-wheel clutches (F1, F2, F3) are in the locking direction state and the fourth free-wheel clutch (F4) is in the overrun driving state, or **in that**, in order to shift a tenth gear (G10), the first and fourth brakes (B1, B4) are engaged and the second and third brakes (B2, B3) are disengaged, and the first and fourth free-wheel clutches (F1, F4) are in the overrun driving state and the second and third free-wheel clutches (F2, F3) are in the locking direction state, or **in that**, in order to shift an eleventh gear (G11), the first and third brakes (B1, B3) are disengaged and the second and fourth brakes (B2, B4) are engaged, and the first and third free-wheel clutches (F1, F3) are in the locking direction state and the second and fourth free-wheel clutches (F2, F4) are in the overrun driving state, or **in that**, in order to shift a twelfth gear (G12), the first, second and fourth brakes (B1, B2, B4) are engaged and the third brake (B3) is disengaged, and the first, second and fourth free-wheel clutches (F1, F2, F4) are in the overrun driving state and the third free-wheel clutch (F3) is in the locking direction state, **in that**, in order to shift a thirteenth gear (G13), the first and second brakes (B1, B2) are disengaged and the third and fourth brakes (B3, B4) are engaged, and the first and second free-wheel clutches (F1, F2) are in the locking direction state and the third and fourth free-wheel clutches (F3, F4) are in the overrun driving state, or **in that**, in order to shift a fourteenth gear (G14), the first, third and fourth brakes (B1, B3, B4) are engaged and the second brake (B2) is disengaged, and the first, third and fourth free-wheel clutches (F1, F3, F4) are in the overrun driving state and the second free-wheel clutch (F2) is in the locking direction state, or **in that**, in order to shift a fifteenth gear (G15), the first brake (B1) is disengaged and the second, third and fourth brakes (B2, B3, B4) are engaged, and the first free-wheel clutch (F1) is in the locking direction state and the second, third and fourth free-wheel clutches (F2, F3, F4) are in the overrun driving state, or **in that**, in order to shift a sixteenth gear (G16), the first, second, third and fourth brakes (B1, B2, B3, B4) are engaged, and the first, second, third and fourth free-wheel clutches (F1, F2, F3, F4) are in the overrun driving state.

17. Multi-stage transmission according to one of Claims 1 to 5, **characterized in that** an axial sequence of the front-mounted gear set (VRS) as a minus planetary gear set, the second planetary gear set (RS2) as a minus planetary gear set, and the first planetary gear set (RS1) as a minus planetary gear set is provided.

18. Multi-stage transmission according to Claim 17, **characterized in that** the transmission input shaft (1) is connected to the planet carrier (11) of the front-mounted gear set (VRS), **in that** the sun gear (10) of the front-mounted gear set (VRS) is fixable via the third brake (B3) and is connectable via a third free-wheel clutch (F3) to the ring gear (12) of the front-mounted gear set (VRS), **in that** the ring gear (12) of the front-mounted gear set (VHS) is connected to the planet carrier (8) of the second planetary gear set (RS2) and is connectable via the second free-wheel clutch (F2) to the ring gear (6) of the first planetary gear set (RS1), **in that** the ring gear (9) of the second planetary gear set (RS2) is connected to the transmission output shaft (2) and is connectable via the first free-wheel clutch (F1) of the first planetary gear set (RS1) to the sun gear (4) of the first planetary gear set (RS1), and **in that** the sun gear (7) of the second planetary gear set (RS2) is connected to the planet carrier (5) of the first planetary gear set (RS1).

19. Multi-stage transmission according to either of Claims 17 and 18, **characterized in that**, in order to shift a first gear (G1), the first, second and third brakes (B1, B2, B3) are disengaged and the first, second and third free-wheel clutches (F1, F2, F3) are in the locking direction state, or **in that**, in order to shift a second gear (G2), the first brake (B1) is engaged and the second and third brakes (B2, B3) are disengaged, and the first free-wheel clutch (F1) is in the overrun driving state and the second and third free-wheel clutches (F2, F3) are in the locking direction state, or **in that**, in order to shift a third gear (G3), the second brake (B2) is engaged and the first and third brakes (B1, B3) are disengaged, and the second free-wheel clutch (F2) is in the overrun driving state and the first and third free-wheel clutches (F1, F3) are in the locking direction state, or **in that**, in order to shift a fourth gear (G4), the first and second brakes (B1, B2) are engaged and the third brake (B3) is disengaged, and the first and second free-wheel clutches (F1, F2) are in the overrun driving state and the third free-wheel clutch (F3) is in the locking direction state, or **in that**, in order to shift a fifth gear (G5), the third brake (B3) is engaged and the first and second brakes (B1, B2) are disengaged, and the first and second free-wheel clutches (F1, F2) are in the locking direction state and the third free-wheel clutch (F3) is in the overrun driving state, or **in that**, in order to shift a sixth gear (G6), the first and third brakes (B1, B3) are engaged and the second brake (B2) is disengaged, and the first and third free-wheel clutches (F1, F3) are in the overrun driving state and the second free-wheel clutch (F2) is in the locking direction state, or **in that**, in order to shift a seventh gear (G7), the first brake (B1) is disengaged and the second and third brakes (B2, B3) are engaged, and the first free-wheel clutch (F1) is in the locking direction state and the second and third free-wheel clutches (F2, F3) are in the overrun driving state, or **in that**, in order to shift an eighth gear (G8), the first, second and third brakes (B1, B2, B3) are engaged, and the first, second and third free-wheel clutches (F1, F2, F3) are in the overrun driving state.

20. Multi-stage transmission according to one of Claims 1 to 5, **characterized in that** an axial sequence of the second front-mounted gear set (VR2) as a minus planetary gear set, the first front-mounted gear set (VR1) as a minus planetary gear set, the second planetary gear set (RS2) as a minus planetary gear set, and the first planetary gear set (RS1) as a minus planetary gear set is provided.

21. Multi-stage transmission according to Claim 20, **characterized in that** the transmission input shaft (1) is connected to the planet carrier (17) of the second front-mounted gear set (VR2), **in that** the sun gear (16) of the second front-mounted gear set (VR2) is connected to the planet carrier (14) of the first front-mounted gear set (VR1) and is connectable via a fourth free-wheel clutch (F4) to the ring gear (18) of the second front-mounted gear set (VR2), **in that** the ring gear (18) of the second front-mounted gear set (VR2) is fixable via the fourth brake (B4), **in that** the sun gear (13) of the first front-mounted gear set (VR1) is fixable via the third brake (B3) and is connectable via a third free-wheel clutch (F3) to the planet carrier (14) of the first front-mounted gear set (VR1), **in that** the ring gear (15) of the first front-mounted gear set (VR1) is connected to the planet carrier (8) of the second planetary gear set (RS2) and is connectable via the second free-wheel clutch (F2) to the ring gear (6) of the first planetary gear set (RS1), **in that** the ring gear (9) of the second planetary gear set (RS2) is connected to the transmission output shaft (2) and to the sun gear (4) of the first planetary gear set (RS1), and **in that** the sun gear (7) of the second planetary gear set (RS2) is connected to the planet carrier (5) of the first planetary gear set (RS1).

22. Multi-stage transmission according to either of Claims 20 and 21, **characterized in that**, in order to shift a first gear (G1), the second, third and fourth brakes (B2, B3, B4) are disengaged, and the second, third and fourth free-wheel clutches (F2, F3, F4) are in the locking direction state, or **in that**, in order to shift a second gear (G2), the second brake (B2) is engaged and the third and fourth brakes (B3, B4) are disengaged, and the second free-wheel clutch (F2) is in the overrun driving state and the third and fourth free-wheel clutches (F3, F4) are in the locking direction state, or **in that**, in order to shift a third gear (G3), the third brake (B3) is engaged and the second and fourth brakes (B2, B4) are disengaged, and the third free-wheel clutch (F3) is in the overrun driving state and the second and fourth free-wheel clutches (F2, F4) are in the locking direction state, or **in that**, in order to shift a fourth gear (G4), the second and third brakes (B2, B3) are engaged and the fourth brake (B4) is disengaged, and the second and third free-wheel clutches (F2, F3) are in the overrun driving state and the fourth free-wheel clutch (F4) is in the locking direction state, or **in that**, in order to shift a fifth gear (G5), the fourth brake (B4) is engaged and the second and third brakes (B2, B3) are disengaged, and the second and third free-wheel clutches (F2, F3) are in the locking direction state and the fourth free-wheel clutch (F4) is in the overrun driving state, or **in that**, in order to shift a sixth gear (G6), the second and fourth brakes (B2, B4) are engaged and the third brake (B3) is disengaged, and the second and fourth free-wheel clutches (F2, F4) are in the overrun driving state and the third free-wheel clutch (F3) is in the locking direction state, or **in that**, in order to shift a seventh gear (G7), the second brake (B2) is disengaged and the third and fourth brakes (B3, B4) are engaged, and the second free-wheel clutch (F2) is in the locking direction state and the third and fourth free-wheel clutches (F3, F4) are in the overrun driving state, or **in that**, in order to shift an eighth gear (G8), the second, third and fourth brakes (B2, B3, B4) are engaged, and the second, third and fourth free-wheel clutches (F2, F3, F4) are in the overrun driving state.

23. Multi-stage transmission according to one of the preceding claims, **characterized in that** the multi-stage transmission is designed as a bottom bracket transmission with planetary gear sets (VRS, VR1, VR2, RS1, RS2, NRS, NR1, NR2) arranged coaxially with respect to one another.

24. Multi-stage transmission according to Claim 5, **characterized in that** the transmission input shaft (1) is connectable via a zeroth free-wheel clutch (F0) to the electric machine (EM).

25. Bicycle or pedelec having a multi-stage transmission according to one of the preceding claims.

## Revendications

1. Transmission à étages multiples de construction planétaire pour un vélo ou un vélo à assistance électrique, comportant un arbre d'entrée de transmission (1) en tant qu'entraînement et un arbre de sortie de transmission (2) en tant que prise de force, comportant au moins trois trains planétaires (VRS, VR1, VR2, RS1, RS2, NRS, NR1, NR2), un premier train planétaire (RS1) et un deuxième train planétaire (RS2) étant réalisés sous forme de train de pignons de passage de vitesse principal et au moins un autre train planétaire (VRS, VR1, VR2, NRS, NR1, NR2) étant réalisé sous forme de train de pignons monté devant la transmission ou sous forme de train de pignons monté derrière la transmission, au moins trois embrayages à roue libre (F1, F2, F3, F4) et au moins trois freins (B1, B2, B3, B4) étant prévus pour la réalisation d'au moins huit vitesses (G1, G2, G3, G4, G5, G6, G7, G8, G9, G10, G11, G12, G13, G14, G15, G16), **caractérisée en ce qu'**un porte-satellites (5) du premier train planétaire (RS1) est relié à un pignon planétaire (7) du deuxième train planétaire (RS2), une couronne (6) du premier train planétaire (RS1) pouvant être fixée par le biais d'un deuxième frein (B2) et pouvant être reliée par le biais d'un deuxième embrayage à roue libre (F2) à un porte-satellites (8) du deuxième train planétaire (RS2) ou à une couronne (9) du deuxième train planétaire (RS2), le porte-satellites (8) du deuxième train planétaire (RS2) étant relié à l'arbre d'entrée de transmission (1) ou à un élément de train de pignons en tant que sortie d'un train de pignons monté devant la transmission (VR1, VRS), la couronne (9) du deuxième train planétaire (RS2) étant reliée à l'arbre de sortie de transmission (2) ou à un élément de train de pignons en tant qu'entrée d'un train de pignons monté derrière la transmission (NRS, NR1), soit un pignon planétaire (4) du premier train planétaire (RS1) pouvant être fixé par le biais d'un premier frein (B1) et pouvant être relié par le biais d'un premier embrayage à roue libre (F1) au porte-satellites (8) du deuxième train planétaire (RS2) ou à la couronne (9) du deuxième train planétaire (RS2), soit un pignon planétaire (4) du premier train planétaire (RS1) étant relié au porte-satellites (8) du deuxième train planétaire (RS2) ou à la couronne (9) du deuxième train planétaire (RS2).

2. Transmission à étages multiples selon la revendication 1, **caractérisée en ce qu'**en cas de trains de pignons montés devant la transmission (VRS, VR1, VR2) et de trains de pignons montés derrière la transmission (NRS, NR1, NR2) réalisés sous forme de trains de pignons négatifs, un premier élément de train de pignons est un porte-satellites (11, 14, 17, 20, 23, 26) en tant qu'entrée, un deuxième élément de train de pignons est un pignon planétaire (10, 13, 16, 19, 22, 25) ou une couronne (12, 15, 18, 21,24, 27) en tant que sortie et un troisième élément de train de pignons fixé par le biais d'un troisième frein (B3) ou d'un quatrième frein (B4) est la couronne restante (12, 15, 18, 21, 24, 27) ou le pignon planétaire restant (10, 13, 16, 19, 22, 25).

3. Transmission à étages multiples selon la revendication 1 ou 2, **caractérisée en ce qu'**en cas de trains de pignons montés devant la transmission (VRS, VR1, VR2) et de trains de pignons montés derrière la transmission (NRS, NR1, NR2) réalisés sous forme de trains de pignons positifs, un premier élément de train de pignons est une couronne (12, 15, 18, 21, 24, 27) en tant qu'entrée, un deuxième élément de train de pignons est un pignon planétaire (10, 13, 16, 19, 22, 25) ou un porte-satellites (11, 14, 17, 20, 23, 26) en tant que sortie et un troisième élément de train de pignons fixé par le biais d'un troisième frein (B3) ou d'un quatrième frein (B4) est le pignon planétaire restant (10, 13, 16, 19, 22, 25) ou le porte-satellites restant (11, 14, 17, 20, 23, 26) .

4. Transmission à étages multiples selon l'une des revendications précédentes, **caractérisée en ce que** des freins à roue libre sont prévus en tant que freins (B1, B2, B3, B4).

5. Transmission à étages multiples selon l'une des revendications précédentes, **caractérisée en ce qu'**au moins une machine électrique (EM) est prévue.

6. Transmission à étages multiples selon l'une des revendications précédentes, **caractérisée en ce que**, dans un ordre axial, un train de pignons monté devant la transmission (VRS) est prévu en tant que train planétaire négatif, le deuxième train planétaire (RS2) est prévu en tant que train planétaire négatif, le premier train planétaire (RS1) est prévu en tant que train planétaire négatif, et un train de pignons monté derrière la transmission (NRS) est prévu en tant que train planétaire négatif.

7. Transmission à étages multiples selon la revendication 6, **caractérisée en ce que** l'arbre d'entrée de transmission (1) est relié au porte-satellites (11) du train de pignons monté devant la transmission (VRS), **en ce que** le pignon planétaire (10) du train de pignons monté devant la transmission (VRS) peut être fixé par le biais du troisième frein (B3) et peut être relié par le biais d'un troisième embrayage à roue libre (F3) à la fois à la couronne (12) du train de pignons monté devant la transmission (VRS) et au porte-satellites (8) du deuxième train planétaire (RS2) ainsi que par le biais du deuxième embrayage à roue libre (F2) du deuxième train planétaire (RS2) à la couronne (6) du premier train planétaire (RS1), **en ce que** la couronne (6) du deuxième train planétaire (RS2) est reliée au porte-satellites (26) du train de pignons monté derrière la transmission (NRS) et peut reliée par le biais du premier embrayage à roue libre (F1) au pignon planétaire (4) du premier train planétaire (RS1), **en ce que** le pignon planétaire (7) du deuxième train planétaire (RS2) est relié au porte-satellites (5) du premier train planétaire (RS1), **en ce que** la couronne (27) du train de pignons monté derrière la transmission (NRS) peut être fixée par le biais du quatrième frein (B4) et peut être reliée à l'arbre de sortie de transmission (2) par le biais du quatrième embrayage à roue libre (F4) et **en ce que** le pignon planétaire (25) du train de pignons monté derrière la transmission (NRS) est relié à l'arbre de sortie de transmission (2).

8. Transmission à étages multiples selon l'une des revendications 1 à 5, **caractérisée en ce que**, dans un ordre axial, un deuxième train de pignons monté devant la transmission (VR2) est prévu en tant que train planétaire négatif, un premier train de pignons monté devant la transmission (VR1) est prévu en tant que train planétaire négatif, le deuxième train planétaire (RS2) est prévu en tant que train planétaire négatif, et le premier train planétaire (RS1) est prévu en tant que train planétaire négatif.

9. Transmission à étages multiples selon la revendication 8, **caractérisée en ce que** l'arbre d'entrée de transmission (1) est relié au porte-satellites (17) du deuxième train de pignons monté devant la transmission (VR2), **en ce que** la couronne (18) du deuxième train de pignons monté devant la transmission (VR2) peut être fixée par le biais du quatrième frein (B4), **en ce que** le pignon planétaire (16) du deuxième train de pignons monté devant la transmission (VR2) est relié au porte-satellites (14) du premier train de pignons monté devant la transmission (VR1) et peut être relié par le biais d'un quatrième embrayage à roue libre (F4) à la couronne (18) du deuxième train de pignons monté devant la transmission (VR2), **en ce que** le pignon planétaire (13) du premier train de pignons monté devant la transmission (VR1) peut être fixé par le biais du troisième frein (B3) et peut être relié par le biais d'un troisième embrayage à roue libre (F3) au porte-satellites (14) du premier train de pignons monté devant la transmission (VR1), **en ce que** la couronne (15) du premier train de pignons monté devant la transmission (VR1) est reliée au porte-satellites (8) du deuxième train planétaire (RS2) et peut être reliée par le biais du deuxième embrayage à roue libre (F2) à la couronne (6) du premier train planétaire (RS1), **en ce que** le pignon planétaire (7) du deuxième train planétaire (RS2) est relié au porte-satellites (5) du premier train planétaire (RS1), **en ce que** la couronne (9) du deuxième train planétaire (RS2) est reliée à l'arbre de sortie de transmission (2) et peut être reliée par le biais du premier embrayage à roue libre (F1) au pignon planétaire (4) du premier train planétaire (RS1).

10. Transmission à étages multiples selon l'une des revendications 1 à 5, **caractérisée en ce que**, dans un ordre axial, le premier train planétaire (RS1) est prévu en tant que train planétaire négatif, le deuxième train planétaire (RS2) est prévu en tant que train planétaire négatif, un premier train de pignons monté derrière la transmission (NR1) est prévu en tant que train planétaire négatif et un deuxième train de pignons monté derrière la transmission (NR2) est prévu en tant que train planétaire négatif.

11. Transmission à étages multiples selon la revendication 10, **caractérisée en ce que** l'arbre d'entrée de transmission (1) est relié au porte-satellites (8) du deuxième train planétaire (RS2), **en ce que** le pignon planétaire (7) du deuxième train planétaire (RS2) est relié au porte-satellites (5) du premier train planétaire (RS1), **en ce que** la couronne (9) du deuxième train planétaire (RS2) est reliée au porte-satellites (20) du premier train de pignons monté derrière la transmission (NR1) et peut être reliée par le biais du deuxième embrayage à roue libre (F2) à la couronne (6) du premier train planétaire (RS1), **en ce que** la couronne (6) du premier train planétaire (RS1) peut être fixée par le biais du deuxième frein (B2), **en ce que** le pignon planétaire (4) du premier train planétaire (RS1) peut être fixé par le biais du premier frein (B1) et peut être relié par le biais du premier embrayage à roue libre (F1) à l'arbre d'entrée de transmission (1), **en ce que** le pignon planétaire (19) du premier train de pignons monté derrière la transmission (NR1) peut être fixé par le biais du troisième frein (B3) et peut être relié par le biais d'un troisième embrayage à roue libre (F3) à la couronne (21) du premier train de pignons monté derrière la transmission (NR1), **en ce que** la couronne (21) du premier train de pignons monté derrière la transmission (NR1) est reliée au porte-satellites (23) du deuxième train de pignons monté derrière la transmission (NR2), **en ce que** le pignon planétaire (22) du deuxième train de pignons monté derrière la transmission (NR2) est relié à l'arbre de sortie de transmission (2) et peut être relié par le biais d'un quatrième embrayage à roue libre (F4) à la couronne (24) du deuxième train de pignons monté derrière la transmission (NR2), et **en ce que** la couronne (24) du deuxième train de pignons monté derrière la transmission (NR2) peut être fixée par le biais du quatrième frein (B4).

12. Transmission à étages multiples selon l'une des revendications 1 à 5, **caractérisée en ce que**, dans un ordre axial, un deuxième train de pignons monté devant la transmission (VRS2) et doté d'un satellites étagé est prévu en tant que train planétaire négatif, un premier train de pignons monté devant la transmission (VRS1) est prévu en tant que train planétaire négatif, le deuxième train planétaire (RS2) doté d'un satellites étagé est prévu en tant que train planétaire négatif et le premier train planétaire (RS1) est prévu en tant que train planétaire négatif.

13. Transmission à étages multiples selon la revendication 12, **caractérisée en ce que** l'arbre d'entrée de transmission (1) est relié au porte-satellites (17) du deuxième train de pignons monté devant la transmission (VR2) et peut être relié par le biais d'un quatrième embrayage à roue libre (F4) à la couronne (18) du deuxième train de pignons monté devant la transmission (VR2), **en ce que** le pignon planétaire (16) du deuxième train de pignons monté devant la transmission (VR2) peut être fixé par le biais du quatrième frein (B4), **en ce que** la couronne (18) du deuxième train de pignons monté devant la transmission (VR2) est reliée au porte-satellites (14) du premier train de pignons monté devant la transmission (VR1) et peut être reliée par le biais d'un troisième embrayage à roue libre (F3) à la couronne (15) du premier train de pignons monté devant la transmission (VR1), **en ce que** le pignon planétaire (13) du premier train de pignons monté devant la transmission (VR1) peut être fixé par le biais du troisième frein (B3), **en ce que** la couronne (15) du premier train de pignons monté devant la transmission (VR1) est reliée au porte-satellites (8) du deuxième train planétaire (RS2) et peut être reliée par le biais du deuxième embrayage à roue libre (F2) à la couronne (6) du premier train planétaire (RS1), **en ce que** la couronne (9) du deuxième train planétaire (2) est reliée à l'arbre de sortie de transmission (2) et peut être reliée par le biais du premier embrayage à roue libre (F1) au pignon planétaire (4) du premier train planétaire (RS1), et **en ce que** le pignon planétaire (7) du deuxième train planétaire (RS2) est relié au porte-satellites (5) du premier train planétaire (RS1).

14. Transmission à étages multiples selon l'une des revendications 1 à 5, **caractérisée en ce que**, dans un ordre axial, un deuxième train de pignons monté devant la transmission (VR2) est prévu en tant que train planétaire positif, un premier train de pignons monté devant la transmission (VR1) est prévu en tant que train planétaire positif, le deuxième train planétaire (RS2) est prévu en tant que train planétaire négatif, et le premier train planétaire (RS1) est prévu en tant que train planétaire négatif.

15. Transmission à étages multiples selon la revendication 14, **caractérisée en ce que** l'arbre d'entrée de transmission (1) est relié à la couronne (18) du deuxième train de pignons monté devant la transmission (VR2), **en ce que** le pignon planétaire (16) du deuxième train de pignons monté devant la transmission (VR2) peut être fixé par le biais du quatrième frein (B4) et peut être relié par le biais d'un quatrième embrayage à roue libre (F4) au porte-satellites (17) du deuxième train de pignons monté devant la transmission (VR2), **en ce que** le porte-satellites (17) du deuxième train de pignons monté devant la transmission (VR2) est relié à la couronne (15) du premier train de pignons monté devant la transmission (VR1), **en ce que** la couronne (15) du premier train de pignons monté devant la transmission (VR1) peut être reliée par le biais d'un troisième embrayage à roue libre (F3) au porte-satellites (14) du premier train de pignons monté devant la transmission (VR1), **en ce que** le pignon planétaire (13) du premier train de pignons monté devant la transmission (VR1) peut être fixé par le biais du troisième frein (B3), **en ce que** le porte-satellites (14) du premier train de pignons monté devant la transmission (VR1) est relié au porte-satellites (8) du deuxième train planétaire (RS2) et peut être relié par le biais du deuxième embrayage à roue libre (F2) du deuxième train planétaire (RS2) à la couronne (6) du premier train planétaire (RS1), et **en ce que** la couronne (9) du deuxième train planétaire (RS2) est reliée à l'arbre de sortie de transmission (2) et peut être reliée par le biais du premier embrayage à roue libre (F1) au pignon planétaire (4) du premier train planétaire (RS1).

16. Transmission à étages multiples selon l'une des revendications 6 à 15, **caractérisée en ce que** pour le passage d'une première vitesse (G1) le premier, le deuxième, le troisième et le quatrième frein (B1, B2, B3, B4) sont ouverts, le premier, le deuxième, le troisième et le quatrième embrayage à roue libre (F1, F2, F3, F4) étant dans l'état de sens de blocage, ou **en ce que** pour le passage d'une deuxième vitesse (G2) le premier frein (B1) est fermé et le deuxième, le troisième et le quatrième frein (B2, B3, B4) sont ouverts, le premier embrayage à roue libre (F1) étant dans l'état de roue libre et le deuxième, le troisième et le quatrième embrayage à roue libre (F2, F3, F4) étant dans l'état de sens de blocage, ou **en ce que** pour le passage d'une troisième vitesse (G3) le deuxième frein (B2) est fermé et le premier, le troisième et le quatrième frein (B1, B3, B4) sont ouverts, le deuxième embrayage à roue libre (F2) étant dans l'état de roue libre et le premier, le troisième et le quatrième embrayage à roue libre (F1, F3, F4) étant dans l'état de sens de blocage, ou **en ce que** pour le passage d'une quatrième vitesse (G4) le premier et le deuxième frein (B1, B2) sont fermés et le troisième et le quatrième frein (B3, B4) sont ouverts, le premier et le deuxième embrayage à roue libre (F1, F2) étant dans l'état de roue libre et le troisième et le quatrième embrayage à roue libre (F3, F4) étant dans l'état de sens de blocage, ou **en ce que** pour le passage d'une cinquième vitesse (G5) le troisième frein (B3) est fermé et le premier, le deuxième, et le quatrième frein (B1, B2, B4) sont ouverts, le premier, le deuxième et le quatrième embrayage à roue libre (F1, F2, F4) étant dans l'état de sens de blocage et le troisième embrayage à roue libre (F3) étant dans l'état de roue libre, ou **en ce que** pour le passage d'une sixième vitesse (G6) le premier et le troisième frein (B1, B3) sont fermés et le deuxième et le quatrième frein (B2, B4) sont ouverts, le premier et le troisième embrayage à roue libre (F1, F3) étant dans l'état de roue libre et le deuxième et le quatrième embrayage à roue libre (F2, F4) étant dans l'état de sens de blocage, ou **en ce que** pour le passage d'une septième vitesse (G7) le premier et le quatrième frein (B1, B4) sont ouverts et le deuxième et le troisième frein (B2, B3) sont fermés, le premier et le quatrième embrayage à roue libre (F1, F4) étant dans l'état de sens de blocage et le deuxième et le troisième embrayage à roue libre (F2, F3) étant dans l'état de roue libre, ou **en ce que** pour le passage d'une huitième vitesse (G8) le premier, le deuxième et le troisième frein (B1, B2, B3) sont fermés et le quatrième frein (B4) est ouvert, le premier, le deuxième et le troisième embrayage à roue libre (F1, F2, F3) étant dans l'état de roue libre et le quatrième embrayage à roue libre (F4) étant dans l'état de sens de blocage, ou **en ce que** pour le passage d'une neuvième vitesse (G9) le premier, le deuxième, et le troisième frein (B1, B2, B3) sont ouverts et le quatrième frein (B4) est fermé, le premier, le deuxième et le troisième embrayage à roue libre (F1, F2, F3) étant dans l'état de sens de blocage et le quatrième embrayage à roue libre (F4) étant dans l'état de roue libre, ou **en ce que** pour le passage d'une dixième vitesse (G10) le premier et le quatrième frein (B1, B4) sont fermés et le deuxième et le troisième frein (B2, B3) sont ouverts, le premier et le quatrième embrayage à roue libre (F1, F4) étant dans l'état de roue libre et le deuxième et le troisième embrayage à roue libre (F2, F3) étant l'état de sens de blocage, ou **en ce que** pour le passage d'une onzième vitesse (G11) le premier et le troisième frein (B1, B3) sont ouverts et le deuxième et le quatrième frein (B2, B4) sont fermés, le premier et le troisième embrayage à roue libre (F1, F3) étant dans l'état de sens de blocage et le deuxième et le quatrième embrayage à roue libre (F2, F4) étant dans l'état de roue libre, ou **en ce que** pour le passage d'une douzième vitesse (G12) le premier, le deuxième et le quatrième frein (B1, B2, B4) sont fermés et le troisième frein (B3) est ouvert, le premier, le deuxième et le quatrième embrayage à roue libre (F1, F2, F4) étant dans l'état de roue libre et le troisième embrayage à roue libre (F3) étant dans l'état de sens de blocage, **en ce que** pour le passage d'une treizième vitesse (G13) le premier et le deuxième frein (B1, B2) sont ouverts et le troisième et le quatrième frein (B3, B4) sont fermés, le premier et le deuxième embrayage à roue libre (F1, F2) étant dans l'état de sens de blocage et le troisième et le quatrième embrayage à roue libre (F3, F4) étant dans l'état de roue libre, ou **en ce que** pour le passage d'une quatorzième vitesse (G14) le premier, le troisième, et le quatrième frein (B1, B3, B4) sont fermés et le deuxième frein (B2) est ouvert, le premier, le troisième et le quatrième embrayage à roue libre (F1, F3, F4) étant dans l'état de roue libre et le deuxième embrayage à roue libre (F2) étant dans l'état de sens de blocage, ou **en ce que** pour le passage d'une quinzième vitesse (G15) le premier frein (B1) est ouvert et le deuxième, le troisième et le quatrième frein (B2, B3, B4) sont fermés, le premier embrayage à roue libre (F1) étant dans l'état de sens de blocage et le deuxième, le troisième et le quatrième embrayage à roue libre (F2, F3, F4) étant dans l'état de roue libre, **en ce que** pour le passage d'une seizième vitesse (G16) le premier, le deuxième, le troisième et le quatrième frein (B1, B2, B3, B4) sont fermés, le premier, le deuxième, le troisième et le quatrième embrayage à roue libre (F1, F2, F3, F4) étant dans l'état de roue libre.

17. Transmission à étages multiples selon l'une des revendications 1 à 5, **caractérisée en ce que**, dans un ordre axial, le train de pignons monté devant la transmission (VRS) est prévu en tant que train planétaire négatif, le deuxième train planétaire (RS2) est prévu en tant que train planétaire négatif et le premier train planétaire (RS1) est prévu en tant que train planétaire négatif.

18. Transmission à étages multiples selon la revendication 17, **caractérisée en ce que** l'arbre d'entrée de transmission (1) est relié au porte-satellites (11) du train de pignons monté devant la transmission (VRS), **en ce que** le pignon planétaire (10) du train de pignons monté devant la transmission (VRS) peut être fixé par le biais du troisième frein (B3) et peut être relié par le biais d'un troisième embrayage à roue libre (F3) à la couronne (12) du train de pignons monté devant la transmission (VRS), **en ce que** la couronne (12) du train de pignons monté devant la transmission (VRS) est reliée au porte-satellites (8) du deuxième train planétaire (RS2) et peut être reliée par le biais du deuxième embrayage à roue libre (F2) à la couronne (6) du premier train planétaire (RS1), **en ce que** la couronne (9) du deuxième train planétaire (RS2) est reliée à l'arbre de sortie de transmission (2) et peut être reliée par le biais du premier embrayage à roue libre (F1) du premier train planétaire (RS1) au pignon planétaire (4) du premier train planétaire (RS1), et **en ce que** le pignon planétaire (7) du deuxième train planétaire (RS2) est relié au porte-satellites (5) du premier train planétaire (RS1).

19. Transmission à étages multiples selon la revendication 17 ou 18, **caractérisée en ce que** pour le passage d'une première vitesse (G1) le premier, le deuxième et le troisième frein (B1, B2, B3) sont fermés, le premier, le deuxième et le troisième embrayage à roue libre (F1, F2, F3) étant dans l'état de sens de blocage, ou **en ce que** pour le passage d'une deuxième vitesse (G2) le premier frein (B1) est fermé et le deuxième et le troisième frein (B2, B3) sont ouverts, le premier embrayage à roue libre (F1) étant dans l'état de roue libre et le deuxième et le troisième embrayage à roue libre (F2, F3) étant dans l'état de sens de blocage, ou **en ce que** pour le passage d'une troisième vitesse (G3) le deuxième frein (B2) est fermé et le premier et le troisième frein (B1, B3) sont ouverts, le deuxième embrayage à roue libre (F2) étant dans l'état de roue libre et le premier et le troisième embrayage à roue libre (F1, F3) étant dans l'état de sens de blocage, ou **en ce que** pour le passage d'une quatrième vitesse (G4) le premier et le deuxième frein (B1, B2) sont fermés et le troisième frein (B3) est ouvert, le premier et le deuxième embrayage à roue libre (F1, F2) étant dans l'état de roue libre et le troisième embrayage à roue libre (F3) étant dans l'état de sens de blocage, ou **en ce que** pour le passage d'une cinquième vitesse (G5) le troisième frein (B3) est fermé et le premier et le deuxième frein (B1, B2) sont ouverts, le premier et le deuxième embrayage à roue libre (F1, F2) étant dans l'état de sens de blocage et le troisième embrayage à roue libre (F3) étant dans l'état de roue libre, ou **en ce que** pour le passage d'une sixième vitesse (G6) le premier et le troisième frein (B1, B3) sont fermés et le deuxième frein (B2) est ouvert, le premier et le troisième embrayage à roue libre (F1, F3) étant dans l'état de roue libre et le deuxième embrayage à roue libre (F2) étant dans l'état de sens de blocage, ou **en ce que** pour le passage d'une septième vitesse (G7) le premier frein (B1) est ouvert et le deuxième et le troisième frein (B2, B3) sont fermés, le premier embrayage à roue libre (F1) étant dans l'état de sens de blocage et le deuxième et le troisième embrayage à roue libre (F2, F3) étant dans l'état de roue libre, ou **en ce que** pour le passage d'une huitième vitesse (G8) le premier, le deuxième et le troisième frein (B1, B2, B3) sont fermés, le premier, le deuxième et le troisième embrayage à roue libre (F1, F2, F3) étant dans l'état de roue libre.

20. Transmission à étages multiples selon l'une des revendications 1 à 5, **caractérisée en ce que**, dans un ordre axial, le deuxième train de pignons monté devant la transmission (VR2) est prévu en tant que train planétaire négatif, le premier train de pignons monté devant la transmission (VR1) est prévu en tant que train planétaire négatif, le deuxième train planétaire (RS2) est prévu en tant que train planétaire négatif, et le premier train planétaire (RS1) est prévu en tant que train planétaire négatif.

21. Transmission à étages multiples selon la revendication 20, **caractérisée en ce que** l'arbre d'entrée de transmission (1) est relié au porte-satellites (17) du deuxième train de pignons monté devant la transmission (VR2), **en ce que** le pignon planétaire (16) du deuxième train de pignons monté devant la transmission (VR2) est relié au porte-satellites (14) du premier train de pignons monté devant la transmission (VR1) et peut être relié par le biais d'un quatrième embrayage à roue libre (F4) à la couronne (18) du deuxième train de pignons monté devant la transmission (VR2), **en ce que** la couronne (18) du deuxième train de pignons monté devant la transmission (VR2) peut être fixée par le biais du quatrième frein (B4), **en ce que** le pignon planétaire (13) du premier train de pignons monté devant la transmission (VR1) peut être fixé par le biais du troisième frein (B3) et peut être relié par le biais d'un troisième embrayage à roue libre (F3) au porte-satellites (14) du premier train de pignons monté devant la transmission (VR1), **en ce que** la couronne (15) du premier train de pignons monté devant la transmission (VR1) est reliée au porte-satellites (8) du deuxième train planétaire (RS2) et peut être reliée par le biais du deuxième embrayage à roue libre (F2) à la couronne (6) du premier train planétaire (RS1), **en ce que** la couronne (9) du deuxième train planétaire (RS2) est reliée à l'arbre de sortie de transmission (2) et au pignon planétaire (4) du premier train planétaire (RS1), et **en ce que** le pignon planétaire (7) du deuxième train planétaire (RS2) est relié au porte-satellites (5) du premier train planétaire (RS1).

22. Transmission à étages multiples selon l'une des revendications 20 ou 21, **caractérisée en ce que** pour le passage d'une première vitesse (G1) le deuxième, le troisième et le quatrième frein (B2, B3, B4) sont ouverts, le deuxième, le troisième et le quatrième embrayage à roue libre (F2, F3, F4) étant dans l'état de sens de blocage, ou **en ce que** pour le passage d'une deuxième vitesse (G2) le deuxième frein (B2) est fermé et le troisième et le quatrième frein (B3, B4) sont ouverts, le deuxième embrayage à roue libre (F2) étant dans l'état de roue libre et le troisième et le quatrième embrayage à roue libre (F3, F4) étant dans l'état de sens de blocage, ou **en ce que** pour le passage d'une troisième vitesse (G3) le troisième frein (B3) est fermé et le deuxième et le quatrième frein (B2, B4) sont ouverts, le troisième embrayage à roue libre (F3) étant dans l'état de roue libre et le deuxième et le quatrième embrayage à roue libre (F2, F4) étant dans l'état de sens de blocage, ou **en ce que** pour le passage d'une quatrième vitesse (G4) le deuxième et le troisième frein (B2, B3) sont fermés et le quatrième frein (B4) est ouvert, le deuxième et le troisième embrayage à roue libre (F2, F3) étant dans l'état de roue libre et le quatrième embrayage à roue libre (F4) étant dans l'état de sens de blocage, ou **en ce que** pour le passage d'une cinquième vitesse (G5) le quatrième frein (B4) est fermé et le deuxième et le troisième frein (B2, B3) sont ouverts, le deuxième et le troisième embrayage à roue libre (F2, F3) étant dans l'état de sens de blocage et le quatrième embrayage à roue libre (F4) étant dans l'état de roue libre, ou **en ce que** pour le passage d'une sixième vitesse (G6) le deuxième et le quatrième frein (B2, B4) sont fermés et le troisième frein (B3) est ouvert, le deuxième et le quatrième embrayage à roue libre (F2, F4) étant dans l'état de roue libre et le troisième embrayage à roue libre (F3) étant dans l'état de sens de blocage, ou **en ce que** pour le passage d'une septième vitesse (G7) le deuxième frein (B2) est ouvert et le troisième et le quatrième frein (B3, B4) sont fermés, le deuxième embrayage à roue libre (F2) étant dans l'état de sens de blocage et le troisième et le quatrième embrayage à roue libre (F3, F4) étant dans l'état de roue libre, ou **en ce que** pour le passage d'une huitième vitesse (G8) le deuxième, le troisième et le quatrième frein (B2, B3, B4) sont fermés, le deuxième, le troisième et le quatrième embrayage à roue libre (F2, F3, F4) étant dans l'état de roue libre.

23. Transmission à étages multiples selon l'une des revendications précédentes, **caractérisée en ce que** la transmission à étages multiples est réalisée sous forme de transmission de pédalier comportant des trains planétaires (VRS, VR1, VR2, RS1, RS2, NRS, NR1, NR2) disposés de manière coaxiale les uns par rapport aux autres.

24. Transmission à étages multiples selon la revendication 5, **caractérisée en ce que** l'arbre d'entrée de transmission (1) peut être relié à la machine électrique (EM) par le biais d'un zéroième embrayage à roue libre (F0).

25. Vélo ou vélo à assistance électrique comportant une transmission à étages multiples selon l'une des revendications précédentes.
